(19) Europäisches Patentamt
European Patent Office
Office européen des brevets

(11) EP 2 610 273 B1

(12) # EUROPEAN PATENT SPECIFICATION

(45) Date of publication and mention of the grant of the patent:
**07.02.2018 Bulletin 2018/06**

(51) Int Cl.:
*C08F 10/06* (2006.01) *C08F 4/654* (2006.01)
*C08F 4/651* (2006.01)

(21) Application number: **11196166.0**

(22) Date of filing: **30.12.2011**

(54) **Catalyst component**

Katalysatorkomponente

Composant de catalyseur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2013 Bulletin 2013/27**

(73) Proprietor: **Borealis AG**
**1220 Vienna (AT)**

(72) Inventors:
- **Kipiani, Georgy**
  **00810 Helsinki (FI)**
- **Leinonen, Timo**
  **06750 Tolkkinen (FI)**
- **Denifl, Peter**
  **00990 Helsinki (FI)**
- **Mulari, Reijo**
  **06450 Porvoo (FI)**
- **Krogerus, Tommi**
  **02940 Espoo (FI)**

(74) Representative: **Maiwald Patentanwalts GmbH**
**Elisenhof**
**Elisenstrasse 3**
**80335 München (DE)**

(56) References cited:
**WO-A1-2004/054711 US-A1- 2008 161 513**

- **DATABASE WPI Week 199819, Derwent Publications Ltd., London, GB; AN 1998-212800 -& JP H1 060041 A (BATTELLE MEMORIAL INST) 03 March 1998**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 610 273 B1

## Description

### Catalyst Component

The invention relates to process for preparing an olefin polymerization catalyst component in the form of solid particles. The present specification also describes a particulate olefin polymerisation catalyst component, particularly one comprising a Group 2 metal and to a process for preparing same. The specification also describes the use of such a catalyst component for preparing a catalyst used in the polymerisation of olefins.

### Background of the invention

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise (b) further catalyst component(s), such as a cocatalyst and/or an external donor.

Various methods for preparing ZN catalysts are known in the state of art. In one known method, a supported ZN catalyst system is prepared by impregnating the catalyst components on a particulate support material. In WO-A-01 55 230, the catalyst component(s) are supported on a porous, inorganic or organic particulate carrier material, such as silica.

In a further well known method the carrier material is based on one of the catalyst components, e.g. on a magnesium compound, such as $MgCl_2$. This type of carrier material can also be formed in various ways. EP-A-713 886 of Japan Olefins describes the formation of $MgCl_2$ adduct with an alcohol which is then emulsified and finally the resultant mixture is quenched to cause the solidification of the droplets.

Alternatively, EP-A-856 013 of BP discloses the formation of a solid Mg-based carrier, wherein the Mg-component containing phase is dispersed to a continuous phase and the dispersed Mg-phase is solidified by adding the two-phase mixture to a liquid hydrocarbon.

The formed solid carrier particles are normally treated with a transition metal compound and optionally with other compounds for forming the active catalyst.

Accordingly, in case of external carriers, some examples of which are disclosed above, the morphology of the carrier is one of the defining factors for the morphology of the final catalyst.

One disadvantage encountered with the supported catalyst systems is that distribution of the catalytically active compounds on the support material is dependent on the surface chemistry and the surface structure of the support material. As a result this may often lead to nonuniform distribution of the active component(s) within the catalyst particle. As a consequence of the uneven distribution of the active sites in catalyst particles catalysts with intra-particle in-homogeneities, as well inter-particle in-homogeneities between separate particles are obtained, which leads finally to in-homogeneous polymer material.

Further, support material will remain in the final polymer as a residue, which might be harmful in some polymer applications.

WO-A-00 08073 and WO-A-00 08074 describe further methods for producing a solid ZN catalyst, wherein a solution of an Mg-based compound and one or more further catalyst compounds are formed and the reaction product thereof is precipitated out of the solution by heating the system. Furthermore, EP-A-926 165 discloses another precipitating method, wherein a mixture of $MgCl_2$ and Mg-alkoxide is precipitated together with a Ti-compound to give a ZN catalyst.

According to US 2005/0176900 a magnesium compound, an alcohol, an ether, a surfactant and an alkyl silicate are reacted first to get a catalyst support, which is then further reacted with a titanium compound. The solid titanium catalyst component is obtained via precipitation. The catalyst component further comprises an internal donor, which can be selected form a great variety of compounds.

WO 03/000757 as well WO 03/000754 describe a process for the preparation of an olefin polymerisation catalyst component, enabling to prepare solid particles of a catalyst component comprising a group 2 metal together with a transition metal however without using any external carrier material or without using conventional precipitation methods, but using so called emulsification-solidification method for producing solid catalyst particles. In this process a phthalate type internal electron donor is prepared in situ during the catalyst preparation in a way and using chemicals so that an emulsion is formed. Droplets of the dispersed phase of the emulsion form the catalyst component, and solidifying the droplets results in solid particulate catalyst.

WO 2004/029112 discloses a further modification of the emulsion-solidification method as described in WO 03/000757 as well WO 03/000754, and relates thus to process for preparing an olefin polymerisation catalyst component, wherein the process is further characterized in that a specific aluminum alkyl compound is brought into contact with the catalyst component, enabling a certain degree of activity increase at higher temperatures.

WO 2004/054711 discloses solid Lewis adducts comprising $MgCl_2$, a Lewis base (LB) belonging to ethers, esters, ketones, silanes or amines and an alcohol ROH, in which R is a $C_{1_}C_{15}$ hydrocarbon group optionally substituted with heteroatoms containing groups, which compounds are in molar ratios to each other defined by the following formula $MgCl_2(ROH)_m(LB)_n$ in which m ranges from 0.05 to 6, n ranges from 0.08 to 6. These adducts are said to allow t0 prepare catalysts having a good morphological stability and high polymerization activities.

US 2008/0161513 discloses a catalyst for olefin polymerization containing three components A, B and C. The component A is a solid catalyst containing titanium, magnesium, a chlorine element and a special internal electron donor; the component B is an organoaluminum compound; and the component C is an external electron donor-organic silicon compound or a 1,4 aromatic diether.

JP 10-060041 relates to solid titanium catalyst components for polymerizing olefins containing Ti, Mg and a halogen as essential components.

Accordingly, although much development work has been done in the field of Ziegler-Natta catalysts, there remains a need for alternative or improved methods of producing ZN catalysts with desirable properties.

Thus it would be highly advantageous if a process for preparing solid olefin polymerisation catalyst components would be available which allows the formation of said solid catalyst components in different ways, like via precipitation or emulsion/solidification method, depending on the desired properties of the catalyst particles, i.e. desired morphology and/or particle size, whereby no gel-like material is formed during catalyst preparation and whereby the produced catalyst results in desired polymer properties, like melt flow rate, xylene soluble content, etc.. In case of propylene-ethylene random polymers being produced, randomness is one essential feature effecting the polymer properties.

A further aspect of the present invention is the desire to avoid as far as possible the use of substances which are considered as potential harmful compounds regarding health as well as environmental aspects. One class of substances which have been considered as potential harmful compounds is phthalates, which have been commonly used as internal electron donors in Ziegler-Natta type catalysts. Although the amount of these phthalate compounds, used as internal donors in catalysts, in the final polymer is very small, it is still desirable to find out alternative compounds to replace phthalate compounds and still get catalysts having good activity, excellent morphology resulting in the desired polymer properties.

Use of non-phthalate donors is as such not new in ZN catalysts. However, such donors are mainly used in catalysts, which are prepared by supporting the catalyst components on an external carrier. Drawbacks of such catalysts are described above.

Until now it has not been possible to form an emulsion just by changing a donor or donor precursor, due to the very sensitive nature of emulsion formation in this catalyst preparation method. Also the precipitation behaviour is significantly effected by the used donor by effecting the solubility of the Mg compounds via formation of a Mg complex. Thus for both methods the conditions for forming an emulsion respectively for precipitation depending on the chosen donor are not obvious for an art skilled person.

Accordingly it is one object of the present invention to provide a catalyst component having desired chemical composition and particle size. In addition the catalyst component has desired morphology.

Accordingly it is one further object of the present invention to provide a method for preparing solid catalyst components which allows the formation of the catalyst components in different ways (e.g. precipitation or emulsion/solidification method) but with a common mechanism and which further does not require the use of phthalates as internal electron donor, yielding catalyst components of desired chemical composition, morphology and particle size, which are suitable for producing polymers with the desired polymer properties.

Further, it is an object of the invention to provide a catalyst as herein described for use in olefin polymerisation.

Surprisingly these objects could be solved by the use of special 1,3-diethers as internal donor.

In addition it has been surprisingly found that 1,3-diether-based catalysts show an improved hydrogen response compared to other ZN-catalysts, especially compared to phthalate-based catalysts, which allows the production of higher MFR products with lower amounts of hydrogen than with catalysts of prior art.
As a consequence the process is more efficient compared to known processes.

Further, as additional benefit has been found that by using the catalyst of the invention or prepared according to the process of the invention, propylene random copolymer with lower randomness compared to polymers produced with corresponding catalysts as described in the present application, however, using as internal donor phthalate type donors, are achievable. Lower randomness is needed, if polymers with higher stiffness are desired. Degree of randomness is dependent on the amount of comonomer.

As example, a copolymer, produced with a catalyst of the invention, with a randomness being at least 3% lower than for copolymers produced with a catalyst using as internal donor phthalate type donors at the same comonomer content is desired in order to achieve the desired properties for the polymer, like stiffness.

Randomness is defined as follows:

Randomness = random ethylene (-P-E-P-) content / the total ethylene content x 100%.

**Description of the invention**

Accordingly the present invention provides a process for preparing a solid olefin polymerisation catalyst component as defined in claim 1.

Thus the present invention provides a process for preparing an olefin polymerisation catalyst component in the form of solid particles comprising the steps of

a) preparing a solution in an organic liquid reaction medium of at least one alkoxy compound (Ax) being the reaction product of at least one compound of a Group 2 metal with at least a monohydric alcohol (A) wherein the solution comprises in addition to the at least one alkoxy compound (Ax) at least one alkoxy compound (Bx) being the reaction product of at least one compound of Group 2 metal and an alcohol (B) comprising in addition to the hydroxyl moiety at least one further oxygen bearing group being different to a hydroxyl moiety, or wherein the alkoxy compound (Ax) is a reaction product of at least one compound of Group 2 metal and a mixture of monohydric alcohol (A) with a further alcohol (B) comprising in addition to the hydroxyl moiety at least one further oxygen bearing group being different to a hydroxyl moiety, ,
b) adding said solution to at least one compound of a Group 4 metal and
c) preparing the solid catalyst component particles,

wherein a 1,3-diether of formula (I) or (II)

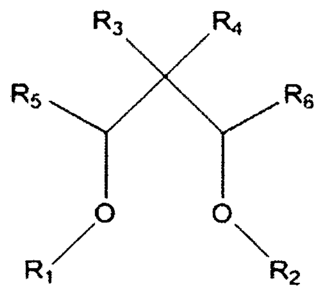 (I) or 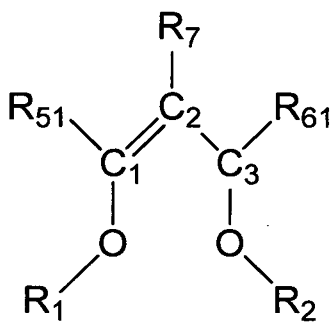 (II)

wherein in formula (I) and (II)

$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,

$R_3$ and $R_4$ of formula (I) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,

$R_5$ and $R_6$ in formula (I) are the same or different and can be H or a linear or branched $C_1$-$C_{12}$-alkyl or can form together an aliphatic ring with 5 to 8 C-atoms,

and $R_{51}$, $R_{61}$ and $R_7$ in formula (II) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms,

or mixtures therefrom is added as internal donor at any step prior to step c), wherein no phthalate compound is used in the process.

The present invention also relates to particles of the catalyst component obtainable according to the above process.

The present invention also relates to an olefin polymerisation catalyst comprising particles of the above catalyst

component and a co-catalyst, preferably an alkyl aluminium co-catalyst and optionally an external electron donor, as well as to the use of said catalyst for polymerising olefins, in particular $C_2$ to $C_{10}$ $\alpha$-olefins, preferably ethylene or propylene, optionally with co-monomers, selected from $C_2$ to $C_{12}$ monomers.

Preferred embodiments are described in dependent claims as well in the following description. Further, the present invention provides the catalyst components obtainable in accordance with the present invention and further use of the catalyst components in the olefin polymerisation.

The invention will be described in the following in greater detail, referring to the particular preferred embodiments. Essential in all embodiments is that solid catalyst can be prepared via liquid/liquid two-phase (emulsion) system - solidification method or via precipitation method without the need of using phthalate compounds leading to catalyst particles having desired physical properties, e.g. especially desired morphological properties and/or desired particle size and particle size distribution.

It has been surprisingly found by the inventors of the present invention that catalyst component particles having in embodiments desired morphology and/or particle size and/or particle size distribution can be obtained by the emulsion-solidification or precipitation way of preparing Ziegler-Natta (ZN) type catalysts, which are suitable for use in olefin polymerisation, in particular for propylene polymerisation, but not requiring the use of phthalates. Further, the chemical composition of the catalysts of the invention differ from the one of the closest prior art. According to the replica effect, the polymer particles produced by using the inventive catalyst have desired morphological properties, too.

The inventive catalyst preparation is based on a liquid/liquid two-phase system (emulsion/solidification method) or on a precipitation method where no separate external carrier materials such as silica or $MgCl_2$ are needed in order to get solid catalyst particles.

This process for preparing solid catalyst particles is in particular characterized in that the formation of the catalyst component comprises use of at least one alkoxy compound (Ax) being the reaction product of at least one compound of Group 2 metal and at least a monohydric alcohol (A) and further characterized that non-phthalic 1,3-diethers as internal electron donor are used in the catalyst preparation as such.

According to one embodiment the alkoxy compound (Ax) is a reaction product of at least one compound of Group 2 metal and a mixture of monohydric alcohol (A) with a further alcohol (B) comprising in addition to the hydroxyl moiety at least one further oxygen bearing group being different to a hydroxyl moiety.

According to a further embodiment in addition to the at least one alkoxy compound (Ax) being a reaction product of at least one compound of Group 2 metal and a monohydric alcohol (A),an additional alkoxy compound (Bx) is used being a reaction product of at least one compound of Group 2 metal and an alcohol comprising in addition to the hydroxyl moiety at least one further oxygen bearing group being different to a hydroxyl moiety, as defined below (alcohol B).

Preferably the alkoxy compound is alkoxy compound (Ax) being a reaction product of at least one compound of Group 2 metal, as described further below, and said mixture of alcohol (A) and (B).

The alkoxy compounds (Ax and Bx) can be prepared *in situ in* the first step of the catalyst preparation process by reacting said compounds of Group 2 metal with the alcohol or alcohol mixture as described above, or said alkoxy compounds can be separately prepared reaction products, or they can be even commercially available as ready compounds and used as such in the catalyst preparation process of the invention.

During preparation of the alkoxy compounds (Ax or Bx) from the at least one compound of Group 2 metal and the alcohol or alcohol mixture as defined above, a donor can be added into the reaction mixture, whereby a Group 2 metal complex (Complex Ac or Bc) is formed, which is defined in this application to be a complex of at least the Group 2 metal compound, the alcohol or alcohol mixture and a donor.

If the alkoxy compounds (Ax) and/or (Bx) are formed without using any donor(s), donor(s) as such is added separately to the reaction product solution or during preparation of the catalyst component.

Compounds of Group 2 metal are selected from the group comprising, preferably consisting of Group 2 metal dialkyls, alkyl Group 2 metal alkoxides, alkyl Group 2 metal halides and Group 2 metal dihalides. It can further be selected from the group consisting of dialkyloxy Group 2 metal, diaryloxy Group 2 metal, alkyloxy Group 2 metal halides, aryloxy Group 2 metal halides, alkyl Group 2 metal alkoxides, aryl Group 2 metal alkoxides and alkyl Group 2 metal aryloxides. Preferably Group 2 metal is magnesium.

Monohydric alcohols (A) are those of formula ROH in which R is a linear or branched $C_1$-$C_{20}$ alkyl.

Typical $C_1$-$C_5$ monohydric alcohols are methanol, ethanol, n-propanol, iso-propanol, n-butanol, iso-butanol, sec.butanol, tert.butanol, n-amyl alcohol, iso-amyl alcohol, sec. amyl alcohol, tert. amyl alcohol, diethyl carbinol, sec. isoamyl alcohol, tert. butyl carbinol.

Typical $C_6$-$C_{10}$ monohydric alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol. Typical >$C_{10}$ monohydric alcohols are n-1-undecanol, n-1-dodecanol, n-1-tridecanol, n-1-tetradecanol, n-1-pentadecanol,1-hexadecanol, n-1-heptadecanol and n- 1 octadecanol. The monohydric alcohols may be unsaturated, as long as they do not act as catalyst poisons.

Preferable monohydric alcohols are those of formula ROH in which R is a $C_2$-$C_{16}$ alkyl group, most preferably

a $C_4$-$C_{12}$ alkyl group, particularly 2-ethyl-1-hexanol.

Alcohol (B) is an alcohol which comprises in addition to the hydroxyl moiety at least one further oxygen bearing group being different to a hydroxyl moiety

Typically, such further oxygen bearing group is an ether moiety. The alcohol (B) as defined above may be aliphatic or aromatic although aliphatic compounds are preferred. The aliphatic compounds may be linear, branched or cyclic or any combination thereof and in particular preferred alcohols are those comprising one ether moiety.

Illustrative examples of such preferred ether moiety containing alcohols (B) to be employed in accordance with the present invention are glycol monoethers, in particular $C_2$ to $C_4$ glycol monoethers, such as ethylene or propylene glycol monoethers wherein the ether moieties comprise from 2 to 18 carbon atoms, preferably from 2 to 12 carbon atoms. Preferred monoethers are $C_2$ to $C_4$ glycol monoethers and derivatives thereof. Illustrative and preferred examples are ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, propylene glycol 2-ethylhexyl ether, with ethylene glycol hexyl ether, 1,3-propylene glycol ethyl ether and 1,3-propylene glycol n-butyl ether, being particularly preferred.

The most preferred alcohol (B) is 1,3-propylene glycol n-butyl ether.

Usually the different alkoxy compounds or alcohols are employed in a mole ratio of from 10:1 to 1:10, preferably this mole ratio is from 8:1 to 1:8, more preferably 6:1 to 1:6, even more preferably 4:1 to 1:4 and in embodiments also 2:1 to 1:2. This ratio can be adjusted depending on the used donor e.g. donors with short chains require longer chain alcohols and vice versa.

The reaction for the preparation of the alkoxy compounds (Ax) and (Bx) may in embodiments, be carried out preferably in an aromatic or aromatic/aliphatic medium at a temperature of 20° to 80°C, and in case that the Group 2 metal is magnesium, the preparation of the alkoxy magnesium compound may be carried out at a temperature of 50° to 70°C.

The reaction medium used as solvent can be aromatic or a mixture of aromatic and aliphatic hydrocarbons, the latter one containing 5 - 20 carbon atoms, preferably 5 - 16 carbon atoms more preferably 5 - 12 carbon atoms and most preferably 5 to 9 carbon atoms. Preferably, the aromatic hydrocarbon is selected substituted and unsubstituted benzenes, preferably from alkylated benzenes, even more preferably from toluene and xylenes, and is most preferably toluene.

The molar ratio of said reaction medium to magnesium is preferably less than 10, for instance from 4 to 10, preferably from 5 to 9.

Alkoxy compounds (Ax) and (Bx) are preferably alkoxy magnesium compounds.

The alkoxy magnesium compound group is preferably selected from the group consisting of magnesium dialkoxides, complexes of a magnesium dihalide and an alcohol, and complexes of a magnesium dihalide and a magnesium dialkoxide, or mixtures therefrom. More preferably the alkoxy magnesium compound is a magnesium dialkoxide compound.

The alkoxy magnesium compound group is the a reaction product of an alcohol (A) respectively alcohol (B) or a mixture of alcohol (A) and alcohol (B) with a magnesium compound selected from the group consisting of dialkyl magnesiums, alkyl magnesium alkoxides, alkyl magnesium halides and magnesium dihalides. It can further be selected from the group consisting of dialkyloxy magnesium, diaryloxy magnesium, alkyloxy magnesium halides, aryloxy magnesium halides, alkyl magnesium alkoxides, aryl magnesium alkoxides and alkyl magnesium aryloxides.

The magnesium dialkoxide is preferably the reaction product of dialkyl magnesium of the formula $R_2Mg$, wherein each one of the two Rs is a similar or different $C_1$-$C_{20}$ alkyl, preferably a similar or different $C_2$-$C_{10}$ alkyl, and alcohol A respectively B.

Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula $R_2Mg$ is a butyl group and the other R is an ethyl or octyl group, i.e. the dialkyl magnesium compound is butyl octyl magnesium or ethyl butyl magnesium.

Typical alkyl-alkoxy magnesium compounds RMgOR, when used, are ethyl magnesium butoxide, butyl magnesium pentoxide, octyl magnesium butoxide and octyl magnesium octoxide.

The electron donor compound used in the preparation of the catalyst of the present invention is selected from 1,3-diethers of formula (I) or (II)

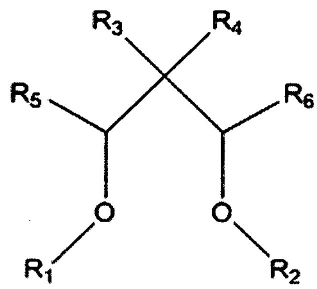 (I) or 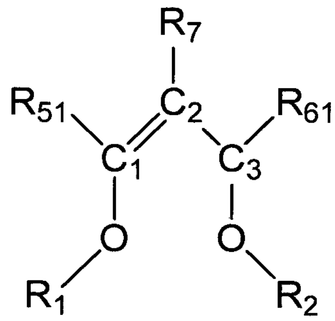 (II)

wherein in formula (I) and (II)

$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,

$R_3$ and $R_4$ of formula (I) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,

$R_5$ and $R_6$ in formula (I) are the same or different and can be H or a linear or branched $C_1$-$C_{12}$-alkyl or can form together an aliphatic ring with 5 to 8 C-atoms,

and $R_{51}$, $R_{61}$ and $R_7$ in formula (VI) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms.

$R_1$ and $R_2$ are preferably the same in formula (I) and (II) and can be a linear or branched $C_1$-$C_{10}$-alkyl, more preferably $C_1$-$C_8$-alkyl, like methyl, ethyl, n-propyl, i-propyl, n-butyl or tert. butyl or 2-ethylhexyl.

In formula (I) is further possible that $R_1$ with $R_5$ and/or $R_2$ with $R_6$ can form together with the oxygen atom a ring with 4 to 6 C-atoms, preferably 4 to 5 C-atoms, like a tetrahydrofuran ring or a tetrahydropyrane ring.

$R_3$ is preferably a linear or branched $C_1$-$C_{10}$-alkyl, more preferably a $C_1$-$C_9$-alkyl, like methyl, ethyl, i-propyl, i-butyl or n-nonyl.

$R_4$ is preferably H or a linear or branched $C_1$-$C_{10}$-alkyl, more preferably a $C_1$-$C_6$-alkyl, like methyl, i-propyl, n-butyl, i-butyl, i-pentyl.

It is also possible that $R_3$ and $R_4$ can form together a ring, preferably an alicyclic ring with preferably 5 to 7 C-atoms, more preferably 5 to 6 C-atoms, like cyclopentan, 2- or 3-cyclopenten, cyclohexene, 2- or 3- or 4-cyclohexene.

It is further possible that this ring is part of an alicyclic or aromatic polycyclic ring system with 9 to 18 C-atoms, like decaline, hydroindane, fluorene or indane.

$R_5$ in formula (I) can be preferably H or a linear or branched $C_2$-$C_8$-alkyl, more preferably can be H or $C_2$-$C_6$-alkyl and most preferably is H.

$R_6$ in formula (I) can be preferably H or a linear or branched $C_2$-$C_8$-alkyl, preferably H or a linear $C_3$-$C_6$-alkyl, like i-propyl or i-butyl.

In formula (I) it is further possible that $R_5$ and $R_6$ can form together an aliphatic ring with 5 to 8 C-atoms, like cyclopentan, cyclohexene or cycloheptane.

In formula (II) $R_{51}$, $R_{61}$ and $R_7$ are the same or different and are preferably H or a linear or branched $C_1$-$C_{10}$-alkyl, more preferably H or a linear or branched $C_1$-$C_8$-alkyl like methyl, i-propyl, n-butyl, i-butyl, i-pentyl.

In formula (II) it is further possible that two or three of $R_{51}$, $R_{61}$ and $R_7$ form together with $C_1$ to $C_3$ an aromatic ring or ring system with 6 to 14 C-atoms, preferably 10 to 14 C-atoms. Such aromatic rings or ring systems are phenyl, naphthalene, anthracene or phenanthrene. Preferably such ring system is naphthalene.

The compound of a transition metal is preferably a compound of a Group 4 metal. The Group 4 metal is preferably titanium, and its compound to be reacted with the complex of a Group 2 is preferably a halide. Equivalent to titanium tetrahalide is the combination of an alkoxy titanium halide and a halogenation agent therefore, which are able to form a titanium tetrahalide *in situ*. The most preferred halide is the chloride.

In a further embodiment of the invention, a compound of a transition metal used in the process can also contain organic ligands typically used in the field known as a single site catalyst.

In a still further embodiment of the invention, a compound of a transition metal can also be selected from Group 5 metals, Group 6 metals, Cu, Fe, Co, Ni and/or Pd compounds.

In principle said olefin polymerisation catalyst components can be obtained in several ways all based on the same mechanism.

In one embodiment, the preparation of the olefin polymerisation catalyst component in form of solid particles comprises the steps of

(a1) preparing a solution (S1) of at least one alkoxy compound (Ax), being a reaction product of at least one compound of a Group 2 metal with at least a monohydric alcohol (A) and an electron donor of formula (I) or formula (II) in an organic liquid reaction medium (OM1),
(b1) combining said solution (S1) with at least one transition metal compound (CT),
(c1) precipitating said catalyst component in the form of a solid particle, and
(d1) recovering the solidified particles of the olefin polymerisation catalyst component.

In step (a1) it is possible to use an alkoxy compound (Ax) being a reaction product of at least one Group 2 metal compound and a monohydric alcohol (A), as defined above.

It is further possible to use an alkoxy compound (Ax) being a reaction product of at least one Group 2 metal compound and a mixture of alcohol (A) with alcohol (B) comprising in addition to the hydroxyl moiety at least one further oxygen bearing group being different to a hydroxyl moiety, as defined above.

The third possibility is to use a mixture of an alkoxy compound (Ax) being a reaction product of at least one Group 2 metal compound and a monohydric alcohol (A) and an alkoxy compound (Bx) being a reaction product of at least one Group 2 metal compound and an alcohol (B) comprising in addition to the hydroxyl moiety at least one further oxygen bearing group being different to a hydroxyl moiety, as defined above.

Preferably the alkoxy compound used is alkoxy compound (Ax) being a reaction product of at least one Group 2 metal compound and a mixture of alcohol (A) with alcohol (B) comprising in addition to the hydroxyl moiety at least one further oxygen bearing group being different to a hydroxyl moiety, as defined above.

It is possible to dissolve the transition metal compound in step (b1) in an organic liquid reaction medium (OM2), whereby solution (S2) is formed.

The process of solids precipitation can be carried out by several methods:

In one embodiment the addition of solution (S1) to the at least one transition metal compound (CT) in step (b1) is done at a temperature of at least 50 °C, preferably in the temperature range of 50 to 110 °C, more preferably in the range of 70 to 100 °C, most preferably in the range of 85 to 95 °C, at which temperature the at least one transition metal compound (CT) is in a liquid form, resulting in the precipitation of said solid catalyst components.

In this case it is especially appreciated that after having combined the solution (S1) with at least one transition metal compound (CT) the whole reaction mixture is kept at least at 50 °C, more preferably is kept in the temperature range of 50 to 110 °C, more preferably in the range of 70 to 100 °C, most preferably in the range of 85 to 95 °C, to secure full precipitation of the catalyst component in form of a solid particle.

In this case it is possible that a surfactant is added in step (a1) or step (b1).

General examples of surfactants include polymer surfactants, such as poly(alkyl methacrylate) and poly(alkyl acrylate), and the like. A polyalkyl methacrylate is a polymer that may contain one or more methacrylate monomers, such as at least two different methacrylate monomers, at least three different methacrylate monomers, etc. Moreover, the acrylate and methacrylate polymers may contain monomers other than acrylate and methacrylate monomers, so long as the polymer surfactant contains at least about 40% by weight acrylate and methacrylate monomers.

Examples of surfactants that are commercially available include those under the trade marks VISCOPLEX$^{(R)}$ available from RohMax Additives, GmbH, especially those having product designations 1-254, 1-256 and those under the trade designations CARBOPOL$^{(R)}$ and PEMULEN$^{(R)}$ available from Noveon/Lubrizol.

In a second embodiment the solution (S1) is mixed with at least one transition metal compound (CT) in liquid form at a temperature of about -20°C to about 30°C and precipitating the solid catalyst components by subsequently slowly raising the temperature to at least 50 °C, preferably in the temperature range of 50 to 110 °C, more preferably in the range of 70 to 100 °C, most preferably in the range of 85 to 95 °C, whereby the rate of temperature increase is in the range from 0.1°C to 30°C per minute, preferably 0.5 to 10°C per minute.

In this case it is especially appreciated that a surfactant is added to the solution (S1) before step (b1). Suitable surfactants are described above.

In both cases it is possible, but not necessary, to add some precipitating agent into the system. Such precipitating agents are able to effect morphology of the particles formed during the precipitation step. In a specific process no precipitating agent has been used. A precipitating agent according to this invention is an agent which promotes the

precipitation of the catalyst component in form of a solid particle. The organic liquid medium used as (OM2), as defined later in this application, can promote the precipitating and thus act and used as a precipitating agent. However, the final catalyst does not contain any such medium.

Moreover it is preferred that no precipitating agent has been used in the process as stated above.

Preferably, the catalyst component as prepared in the previous paragraphs is a precipitated solid particle. "Precipitation" according to this invention means that during the catalyst component preparation a chemical reaction in a solution takes place leading to the desired catalyst component insoluble in said solution.

Suitable alkoxy compounds (Ax) and (Bx) and their preparation have been described above.

Suitable electron donors as well as suitable transition metal compounds are also described above.

Preferably $TiCl_4$ is used as transition metal compound.

The electron donor is added to the alkoxy compound (Ax), or alkoxy compound (Bx) if present, or to the mixture of the alkoxy compounds (Ax) and (Bx), obtained by mixing alkoxy compound (Ax) being a reaction product of at least one Group 2 metal compound as described above with the monohydric alcohol (A) as described above and alkoxy compound (Bx) being a reaction product of at least one Group 2 metal compound as described above and the alcohol (B), as described above, whereby the reaction medium used as solvent for the Group 2 metal compound can be aromatic or a mixture of aromatic and aliphatic hydrocarbons, the latter one containing 5 - 20 carbon atoms, preferably 5 - 16 carbon atoms more preferably 5 - 12 carbon atoms and most preferably 5 to 9 carbon atoms. Preferably, the aromatic hydrocarbon is selected from substituted and unsubstituted benzenes, preferably from alkylated benzenes, even more preferably from toluene and xylenes, and is most preferably toluene.

Additional donors can be added, if so desired into the catalyst preparation in any of steps (a1) to (b1).Preferably additional donors, if used, are non-phthalic acid ester as well.

It is also possible to use mixtures of the above described diethers.

The reaction medium corresponds to the organic liquid reaction medium (OM1) of step (a1).

The organic liquid reaction medium (OM2), where $TiCl_4$ can be solved, can be the same as the organic liquid reaction medium (OM1) or can be different thereto, the latter being preferred.

Preferably the organic liquid reaction medium (OM2) is $C_5$ to $C_{10}$ hydrocarbon, more preferably of a $C_6$ to $C_{10}$ alkane, like heptane, octane or nonane, or any mixtures thereof.

It is in particular appreciated that the organic liquid reaction medium (OM1) is a $C_6$ to $C_{10}$ aromatic hydrocarbon, most preferably toluene, and the organic liquid reaction medium (OM2) is a $C_6$ to $C_{10}$ alkane, most preferably heptane.

Further it is appreciated that the organic liquid reaction media (OM1) and (OM2) are selected in a way which supports the immediate precipitation of the solid catalyst particle.

When adding the solution (S1) to the at least one transition metal compound (CT) mixing is appreciated. Suitable mixing techniques include the use of mechanical as well as the use of ultrasound for mixing, as known to the skilled person.

After precipitation the solid catalyst particle is washed in a known manner.

Accordingly it is preferred that solid catalyst particle is washed at least once up to 6 times, preferably at least twice, most preferably at least three times with a hydrocarbon, which preferably is selected from aromatic and aliphatic hydrocarbons, preferably with toluene, heptane or pentane, more preferably toluene, particularly with hot (e.g. 80 to 100°C) toluene, which might include a smaller or higher amount of $TiCl_4$ in it. The amount of $TiCl_4$ can vary from a few vol% to more than 50-vol%, such as from 5-vol% to 50-vol%, preferably from 5 to 15-vol%. It is also possible that at least one wash is done with 100-vol% $TiCl_4$.

One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

In addition, during the catalyst component preparation a reducing agent, which decreases the amount of titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the catalyst component synthesis and can be added at any step (b1) to (c1), or during the washing step as described above, however, before step (d1).

Preferably the reducing compound is added during the washing step, more preferably during the first washing step with hot toluene.

Illustrative examples of aluminium alkyl and alkoxy compounds to be employed in accordance with the present

invention are:

Tri-($C_1$-$C_6$)-alkyl aluminium compounds and chlorinated aluminium ($C_1$-$C_6$)-alkyl compounds, especially diethyl aluminium chloride;
diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.
The added amount of the optional Al compound depends on the desired degree of reduction of amount of titanium present in the solidified particles of the olefin polymerisation catalyst component being present in the oxidation state +4. The preferred amounts of Al in the catalyst component depend to some extent on the Al compound, e.g. if an Al alkoxy compound is used, the preferred final Al amounts seem to be lower than if e.g. Al alkyl chloride compounds are used.
The final catalyst component particles have an Al content of 0.0 to 0.8 wt%, preferably 0.0 to 0.5 wt% or 0.0 to 0.4 wt%.
The magnesium compound to be added in accordance with the present invention is added in corresponding amounts.
Preferably a chlorinated aluminium alkyl compounds, especially diethyl aluminium chloride; is added.
In the second way the preparation of the catalyst component in form of solid particles comprises the steps of

(a2) preparing a solution of at least one alkoxy compound (Ax), being a reaction product of at least one compound of a Group 2 metal with at least a monohydric alcohol (A) and an electron donor of formula (I) or formula (II) in an organic liquid reaction medium,
(b2) adding said solution of said alkoxy compound (Ax) to at least one compound of a transition metal to produce an emulsion, wherein the dispersed phase of which is in the form of droplets and contains more than 50 mol% of the Group 2 metal in said alkoxy compound (Ax),
(c2) agitating the emulsion in order to maintain the droplets of said dispersed phase within said predetermined average size range of 2 to 500$\mu$m,
(d2) solidifying said droplets of the dispersed phase,
(e2) recovering the solidified particles of the olefin polymerisation catalyst component.

In step (a2) it is possible to use an alkoxy compound (Ax) being a reaction product of at least one Group 2 metal compound and a monohydric alcohol (A), as defined above.
It is further possible to use an alkoxy compound (Ax) being a reaction product of at least one Group 2 metal compound and a mixture of alcohol (A) with alcohol (B) comprising in addition to the hydroxyl moiety at least one further oxygen bearing group being different to a hydroxyl moiety, as defined above.
The third possibility is to use a mixture of an alkoxy compound (Ax) being a reaction product of at least one Group 2 metal compound and a monohydric alcohol (A) and an alkoxy compound (Bx) being a reaction product of at least one Group 2 metal compound and an alcohol (B) comprising in addition to the hydroxyl moiety at least one further oxygen bearing group being different to a hydroxyl moiety, as defined above.
Suitable alkoxy compounds (Ax) and (Bx) and their preparation have been described above.
Suitable electron donors as well as suitable transition metal compounds are also described above.
In step (a2) the solution (S1) is typically a solution of at least one alkoxy compound (Ax) and optionally an alkoxy compound (Bx) in liquid hydrocarbon reaction medium, which can be provided in situ by reacting an alcohol (A) or a mixture of alcohol (A) and alcohol (B) with the Group 2 metal compound in a liquid hydrocarbon medium to form alkoxy compound (Ax), as described above, and optionally mixing alkoxy compound (Ax) with alkoxy compound (Bx), prepared by reacting an alcohol (B) with the Group 2 metal compound in a liquid hydrocarbon medium.
The internal donor as defined above is added preferably in step (a2) to said solution (S1).
The electron donor is added to alkoxy compound (Ax), or alkoxy compound (Bx) if present, or to the mixture of the alkoxy compound (Ax) and (Bx).
Additional donors can be added, if so desired into the catalyst preparation in any of steps (a2) to (c2). Preferably

additional donors, if used, are non-phthalic acid ester as well. Mixtures of the above described donors can also be used.

The solution of step (a2) is then typically added to the at least one compound of a transition metal, such as titanium tetrachloride. This addition preferably is carried out at a low temperature, such as from -10 to 40°C, preferably from -5 to 30°C, such as about 0°C to 25°C.

During any of these steps an organic reaction medium or solvent may be present, typically selected among aromatic and/or aliphatic hydrocarbons as described above.

The process in accordance with the present invention yields as intermediate stage, as identified above an emulsion of a denser, transition metal compound/toluene-insoluble, oil dispersed phase typically having a transition metal metal/Group 2 mol ratio of 0.1 to 10 in an oil disperse phase having a transition metal/Group 2 mol ratio of 10 to 100. Transition metal compound is preferably Group 4 metal compound, and is most preferably $TiCl_4$. Group 2 metal is preferably Mg. This emulsion is then typically agitated, optionally in the presence of an emulsion stabilizer and/or a turbulence minimizing agent, in order to maintain the droplets of said dispersed phase, typically within an average size range of 2 to 500 μm. The catalyst particles are obtained after solidifying said particles of the dispersed phase e.g. by heating.

The said disperse and dispersed phases are thus distinguishable from one another by the fact that the denser oil, if contacted with a solution of Group 4 metal compound preferably $TiCl_4$ in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios. In effect, therefore, virtually the entirety of the reaction product of the Mg complex with the Group 4 metal - which is the precursor of the ultimate catalyst component - becomes the dispersed phase, and proceeds through the further processing steps to the final particulate form. The disperse phase, still containing a useful quantity of Group 4 metal, can be reprocessed for recovery of that metal.

The production of a two-phase reaction product is encouraged by carrying out the Mg complex/Group 4 metal compound reaction at low temperature, specifically above -10°C but below 50°C, preferably between above -5°C and below 40°C. Since the two phases will naturally tend to separate into a lower, denser phase and supernatant lighter phase, it is necessary to maintain the reaction product as an emulsion by agitation, preferably in the presence of an emulsion stabilizer.

The emulsion, i.e. the two phase liquid-liquid system may be formed in all embodiments of the present invention by simple stirring and optionally adding (further) solvent(s) and additives, such as the turbulence minimizing agent (TMA) and/or the emulsifying agents described further below.

Emulsifying agents/emulsion stabilizers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$ (meth)acrylates such as poly(hexadecyl)-methacrylate and poly(octadecyl)-methacrylate. Suitable examples of commercially available surfactants are e.g. those sold under the name of Viscoplex®, like Viscoplex®, 1-124 and 1-126, as indicated earlier in this application.

As mentioned above a turbulence minimizing agent (TMA) can be added to the reaction mixture in order to improve the emulsion formation and maintain the emulsion structure. Said TMA agent has to be inert and soluble in the reaction mixture under the reaction conditions, which means that polymers without polar groups are preferred, like polymers having linear or branched aliphatic carbon backbone chains.

Said TMA is in particular preferably selected from alpha-olefin polymers of alpha-olefin monomers with 6 to 20 carbon atoms, like polyoctene, polynonene, polydecene, polyundecene or polydodecene or mixtures thereof. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70 to 150°C, usually at 80 to 110°C, preferably at 90 to 110°C.

For isolating the solidified particles the reaction mixture is allowed to settle and the solidified particles are recovered from this reaction mixture for example by syphoning or by an in-stream filtering unit.

The solidified particulate product may be washed at least once up to 6 times, preferably at least twice, most preferably at least three times with a hydrocarbon, which preferably is selected from aromatic and aliphatic hydrocarbons, preferably with toluene, heptane or pentane, more preferably toluene, particularly with hot (e.g. 80 to 100°C) toluene,

which might include a smaller or higher amount of $TiCl_4$ in it. The amount of $TiCl_4$ can vary from a few vol% to more than 50-vol%, such as from 5-vol% to 50-vol%, preferably from 5 to 15-vol%. It is also possible that at least one wash is done with 100-vol% $TiCl_4$.

One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

The washing can be optimized to give a catalyst component with novel and desirable properties.

Finally, the washed catalyst component is recovered.

It can further be dried, as by evaporation or flushing with nitrogen or it can be slurred to an oily liquid with or without any drying step.

In addition, during the catalyst component preparation a reducing agent, which decreases the amount of titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the catalyst component synthesis and brought into contact with the droplets of the dispersed phase of the agitated emulsion before recovering the solidified particles in step (e2). I.e. the Al compound can be added at any step (b2) to (d2), or during the washing step as described above, however, before step (e2). Reference is made to WO 2004/029112, EP-A-1 862 480 and to EP-A-1 862 481.

Illustrative examples of aluminium alkyl and alkoxy compounds to be employed in accordance with the present invention are:

Tri-($C_1$-$C_6$)-alkyl aluminium compounds and chlorinated aluminium ($C_1$-$C_6$)-alkyl compounds, especially diethyl aluminium chloride;

diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The added amount of the optional Al compound depends on the desired degree of reduction of amount of titanium present in the solidified particles of the olefin polymerisation catalyst component being present in the oxidation state +4. The preferred amounts of Al in the catalyst component depend to some extent on the Al compound, e.g. if an Al alkoxy compound is used, the preferred final Al amounts seem to be lower than if e.g. Al alkyl chloride compounds are used.

The final catalyst component particles have an Al content of 0.0 to 0.8 wt%, preferably 0.0 to 0.5 wt% or 0.0 to 0.4 wt%.

The magnesium compound to be added in accordance with the present invention is added in corresponding amounts.

The aluminium alkyl or alkoxy compound and the magnesium compound can be used alone or in combination. Preferably an Al alkyl or Al alkyl alkoxy compound, as defined above, is added.

The optional Al or Mg compound or a mixture thereof is preferably added before step (e2), more preferably during the washing step, which comprises at least one, preferably two and more preferably three washing procedures with the same or preferably different hydrocarbons as washing medium.

The aluminium alkyl or alkoxy compound and/ or magnesium compound to be used in the catalyst component preparation of the invention can be added to any of the washing mediums, which are, as described above, preferably toluene, heptane and/or pentane.

Though the procatalyst preparation according to the inventive method can be carried out batch-wise, it is also

preferable and possible to prepare the catalyst component semi-continuously or continuously. In such semi-continuous or continuous process, the solution of the complex of the group 2 metal and said electron donor, which is prepared by reacting the compound of said metal with said electron donor in an organic liquid reaction medium, is mixed with at least one compound of a transition metal, which might be solved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerisation catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerisation reactor, so that a continuous preparation and feed to the reactor is guaranteed. It is also possible to mix the solidified and washed catalyst component with an oily fluidic liquid and store and use the catalyst component as catalyst component-oil slurry. In this way the drying steps can be avoided, which might be sometimes detrimental to the catalyst components morphology. This oil-slurry method is described in general in EP-A-1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

With both production ways, the finally obtained solid catalyst component is desirably in the form of particles having generally an average size range, determined by using a Coulter Counter LS200 at room temperature (20°C) with n-heptane as medium, of 2 to 500 μm, preferably 5 to 200 μm and more preferably 10 to 100, even an average size range of 20 to 60 μm is possible.

The particle size distribution, measured by Coulter method and defined as SPAN of the catalysts of the invention depends on the way of preparation. With the emulsion/solidification method the particle size distribution is usually lower than with the precipitation method. Nevertheless it is desired that the particle size distribution of the solid catalyst components prepared according to the precipitation method is as low as possible and even more preferred similar to that of solid catalyst components prepared according to the emulsion/solidification method.

Preferably the particle size distribution is in the range of 0.5 to at most 4.0, more preferable from 0.5 to at most 3.0 and even more preferably 0.5 to at most 2.0.

SPAN is defined as

$$\frac{d90\ [\mu m] - d10\ [\mu m]}{d50\ [\mu m]}$$

where d90 indicates the particle diameter at 90% cumulative size, d10 indicates the particle diameter at 10% cumulative size, and d50 indicates the particle diameter at 50% cumulative size.

Catalysts prepared according to the method of the present invention have desired morphology and particle size as well as particle size distribution and are suitable for producing polymers with the desired polymer properties.

It has been surprisingly found by the inventors of the present invention that catalyst component particles having desired morphology and particle size as well as particle size distribution can be obtained by a common mechanism either via the precipitation or via the emulsion/solidification way of preparing Ziegler-Natta (ZN) type catalysts, and are suitable for use in olefin polymerisation, like ethylene or propylene, in particular for propylene polymerisation, optionally with other co-monomers selected from $C_2$ - $C_{12}$ monomers, preferably $C_2$ - $C_6$ monomers.

Thus it is a further object of the present invention to provide catalyst components in form of solid particles e.g. by a process as describe above and to the use thereof for the preparation of a catalyst system being suitable in olefin polymerisation processes.

The catalyst components according to the invention have good morphology, good particle size distribution and result in polymerisation catalysts having highly suitable polymerisation activities. According to the replica effect, the polymer particles produced by using the inventive catalyst components have good morphological properties, too.

Not only the catalyst morphology, but also catalyst composition, is of importance in getting the desired properties for the polymers. As indicated earlier in this application such desired properties are good hydrogen response as well as low randomness.

The catalysts of the invention have, as mentioned above, a Group 4 metal, preferably Ti content in the range of 1.0 to 10.0 wt%, preferably 1.5 to 8.5 wt% and more preferably 2.0 to 7.0 wt%; a Group 2 metal, preferably Mg content in the range of 5.0 to 22.0 wt%, preferably 6.0 to 20.0 wt% and more preferably 6.5 to 18.0 wt%; an Al content in the range of 0.0 to 0.8 wt%, preferably 0.0 to 0.5 wt% and more preferably 0.0 to 0.4 wt%.

The amount of Ti, Mg and Al is determined by ICP Analysis as described in the Experimental Part.

The amount of internal donor is in the range of 1.0 to 50.0 wt%, preferably 1.3 to 40.0 wt% and more preferably 1.5 to 35.0 wt% and is normally determined by HPLC or GC.

The maximum amount of donor being possible in the solid catalyst components can be calculated according to the formula

$$100 - (3.917*Mg\% + 4.941*Al\% + 3.962*Ti\%) = \text{max amount of donor } (\%)$$

which is based on the assumption that all Mg is in the form of $MgCl_2$, all Al is in the form of $AlCl_3$ and all Ti is in the form of $TiCl_4$ and no hydrocarbons are present.

The inventive catalyst component preparation is based on a liquid/liquid two-phase system (emulsion/solidification method) or on the precipitation method where in both cases no separate external carrier materials such as silica or $MgCl_2$ are needed in order to get solid catalyst particles.

Polymerisation processes, where the catalyst components of the invention are useful comprise at least one polymerisation stage, where polymerisation is typically carried out in solution, slurry, bulk or gas phase. Typically the polymerisation process comprises additional polymerisation stages or reactors. In one particular embodiment the process contains at least one bulk reactor zone and at least one gas phase reactor zone, each zone comprising at least one reactor and all reactors being arranged in cascade. In one particularly preferred embodiment the polymerisation process for polymerising olefins, in particular propylene optionally with comonomers, like ethylene or other alpha-olefins, comprises at least one bulk reactor and at least one gas phase reactor arranged in that order. In some preferred processes the process comprises one bulk reactor and at least two, e.g. two or three gas phase reactors. The process may further comprise pre- and post reactors. Prereactors comprise typically prepolymerisation reactors. In these kinds of processes use of higher polymerisation temperature (70 °C or higher, preferably 80°C or higher, even 85 °C or higher) either in some or all reactors of the reactor cascade, is preferred in order to achieve some specific properties to the polymers.

For the production of the polypropylene homo- or copolymers according to the invention the catalyst system used comprises in addition to the catalyst components in form of solid particles as described above an organometallic cocatalyst.

Accordingly it is preferred to select the cocatalyst from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

Optionally one or more external donor are used, which may be typically selected e.g. from silanes or any other well known external donors in the field. External donors are known in the art and are used as stereoregulating agent in propylene polymerisation. The external donors are preferably selected from hydrocarbyloxy silane compounds, amino silane compounds and hydrocarbyloxy alkane compounds.

Typical hydrocarbyloxy silane compounds have the formula (II)

$$R^7_pSi(OR^8)_{4-p} \qquad (II)$$

wherein

$R^7$ is an alpha- or beta-branched $C_3$-$C_{12}$-hydrocarbyl,
$R^8$ a $C_1$-$C_{12}$-hydrocarbyl, and

p is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane.
Most preferably, the alkoxy silane compound having the formula (II) is dicyclopentyl dimethoxy silane or cyclohexylmethyl dimethoxy silane.

Typical amino silane compounds have the formula (III)

$$Si(OR^9)_3(NR^{10} R^{11})$$

wherein
$R^9$ is a hydrocarbon group having 1 to 6 carbon atoms, $R^{10}$ is a hydrocarbon group having 1 to 12 carbon atoms or hydrogen atom, and $R^{11}$ is a hydrocarbon group having 1 to 12 carbon atoms.
Preferably these compounds have the formula (IV)

$$Si(OCH_2CH_3)_3(NR^{10}R^{11})$$

Wherein
$R^{10}$ and $R^{11}$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms.
It is in particular preferred that $R^{10}$ and $R^{11}$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^{10}$ and $R^{11}$ are the same and have 1 to 6 carbon atoms, yet more preferably both $R^{10}$ and $R^{11}$ are a $C_1$-$C_4$-alkyl group.

Most preferably the external donor represented by the formula (III) or (IV) is Diethyl aminotriethoxy silane.

The external donor used for the catalyst system is therefore preferably diethyl aminotriethoxy silane, dicyclopentyl dimethoxy silane or cyclohexyl methyldimethoxy silane.

## EXPERIMENTAL PART

### 1. METHODS

**Melt Flow Rate** MFR: ISO 1133; 230 °C, 2,16 kg load

**Particle Size Distribution** PSD:

Coulter Counter LS 200 at room temperature with heptane as medium
**Mean particle size** is given in μm and measured with Coulter Counter LS200 at room temperature with n-heptane as medium; particle sizes below 100 μm by transmission electron microscopy.
**Median particle size (d50)** is given in μm and measured with Coulter Counter LS200 at room temperature with n-heptane as medium.
**Particle size (d10)** is given in μm and measured with Coulter Counter LS200 at room temperature with n-heptane as medium.
**Particle size (d90)** is given in μm and measured with Coulter Counter LS200 at room temperature with n-heptane as medium.
**SPAN** is defined as follows:

$$\frac{d90\ [\mu m] - d10\ [\mu m]}{d50\ [\mu m]}$$

**ICP Analysis (Al, Mg, Ti)**

The elemental analysis of a catalyst was performed by taking a solid sample of mass, M, cooling over dry ice.

Samples were diluted up to a known volume, V, by dissolving in nitric acid ($HNO_3$, 65 %, 5 % of V) and freshly deionised (DI) water (5 % of V). The solution was further diluted with DI water up to the final volume, V, and left to stabilize for two hours.

The analysis was run at room temperature using a Thermo Elemental iCAP 6300 Inductively Coupled Plasma - Optical Emission Spectrometer (ICP-OES) which was calibrated using a blank (a solution of 5 % $HNO_3$), and standards of 0.5 ppm, 1 ppm, 10 ppm, 50 ppm, 100 ppm and 300 ppm of Al, Mg and Ti in solutions of 5 % $HNO_3$.

Immediately before analysis the calibration is 'resloped' using the blank and 100 ppm standard, a quality control sample (20 ppm Al, Mg and Ti in a solution of 5 % $HNO_3$, 3 % HF in DI water) is run to confirm the reslope. The QC sample is also run after every 5th sample and at the end of a scheduled analysis set.

The content of Mg was monitored using the 285.213 nm line and the content for Ti using 336.121 nm line. The content of aluminium was monitored via the 167.079 nm line, when Al concentration in ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

**Determination of donor amounts in the catalyst components**

The determination of donor amounts in the catalyst components is performed using HPLC (UV-detector, RP-8 column, 250 mm × 4 mm). Pure donor compounds are used to prepare standard solutions. 50-100 mg of the catalyst component is weighed in a 20 ml vial (accuracy of weighing 0.1 mg). 10 ml acetonitrile is added and the sample suspension is sonicated for 5-10 min in an ultrasound bath. The acetonitrile suspension is diluted appropriately and a liquid sample is filtered using 0.45 μm filter to the sample vial of HPLC instrument. Peak heights are obtained from HPLC.
The percentage of donor in the catalyst component is calculated using the following equation:

$$\text{Percentage (\%)} = A_1 \bullet c \bullet V \bullet A_2^{-1} \bullet m^{-1} \bullet 0.1\%$$

where

$A_1$ = height of the sample peak
c = concentration of the standard solution (mg/l)
V = volume of the sample solution (ml)
$A_2$ = height of the standard peak
m = weight of the sample (mg)

**Donor analysis via GC**

The donor analysis of a catalyst was performed by taking a solid sample of mass, M, approximately 2 ml of solvent, dichloromethane, was added. Following this approximately 1 ml of deionised water was added to the vial. Finally, a known mass, N, of an internal standard, nonane, was added. The mixture was then sonicated for 15 min, to ensure full dissolution. After sonication the sample is left to settle into two phases and an aliquot of the organic phase is removed, this is then filtered through a 0.45 μm nylon filter into a vial suitable for the gas chromatography instrument.
The analysis is performed on a Perkin Elmer Auto System XL Gas Chromatograph containing a split loop injector and flame ionization detector. The column is a DB-1, 30 m long with an inner diameter of 0.32 mm and a phase thickness of 0.25 μm. The system stays at 40 °C for 5 minutes before ramping at 10 °C/min up to 250 °C, the system is kept at temperature for a further 4 minutes. If required the peak temperature could be raised to 300 °C.

The results are calculated in the following manner:

$$\text{Component (wt\%)} = \frac{Ax * F * N}{Ay * Fistd * M} * 100$$

where:

Ax = component area

F = component factor
N = mass of internal standard (nonane), mg
Ay = area of internal standard (nonane)
Fistd = factor of internal standard (nonane)
M = mass of the sample, mg

**Xylene solubles** XS: Xylene soluble fraction of product at 25°C.
2.0 g of polymer are dissolved in 250 ml p-xylene at 135 °C under agitation. After 30±2 minutes the solution is allowed to cool for 15 minutes at ambient temperature and then allowed to settle for 30 minutes at 25±0.5 °C. The solution is filtered with filter paper into two 100 ml flasks. The solution from the first 100 ml vessel is evaporated in nitrogen flow and the residue is dried under vacuum at 90 °C until constant weight is reached.

$$XS\% = (100 \times m1 \times v0) / (m0 \times v1)$$

m0 = initial polymer amount (g)
m1 = weight of residue (g)
v0 = initial volume (ml)
v1 = volume of analyzed sample (ml)

**RANDOMNESS**

Infrared (IR) spectroscopy was undertaken on Nicolet Magna IR Spectrometer 550. A 220-250 μm film was prepared from the polymer powder at 230°C followed by rapid cooling to room temperature. All IR analysis was done within two hours of film preparation. Quantitative comonomer contents were obtained using peak areas normalised to the peak height of an internal reference band calibrated to previous $^{13}C$ NMR results. Ethylene was quantified using the band at 733 $cm^{-1}$ (baseline 690-780 $cm^{-1}$) the reference band at 809 $cm^{-1}$ (baseline 750-890 $cm^{-1}$). The amount of isolated ethylene units (randomness) was estimated using the peak height of the band at 733 $cm^{-1}$ (baseline 690-780 $cm^{-1}$) and the same reference band described above. Calibration was made to previously obtained $^{13}C$ NMR results.

$$\text{Randomness} = \text{random ethylene (-P-E-P-) content / the total ethylene content} \times 100\%.$$

All reactions in the examples as described are carried out under inert conditions.

**EXAMPLES**

**Example 1:**

*Preparation of a soluble Mg-alkoxide*

A magnesium alkoxide solution was prepared by adding, with stirring, 220.0 ml of a 20 % solution in toluene of BOMAG ($Mg(Bu)_{1,5}(Oct)_{0,5}$, from Crompton GmbH) to a mixture of 50.0 ml 2-ethylhexanol (from Merck Chemicals) and 25.0 ml butoxypropanol (from Sigma-Aldrich) (molar ratio 2-ethylhexanol / butoxypropanol = 1.9, and molar ratio alcohol / Mg = 2,2) in a 300 ml glass reactor during 80 minutes. During the addition the reactor contents were maintained below 25 °C. After addition of the BOMAG was completed, mixing of the reaction mixture at 25 °C was continued for another 60 minutes. The temperature of the reaction mixture was then raised to 60 °C within 14 minutes and held at that temperature for 60 minutes with stirring, at which time reaction was complete.

**Example 2: *Precipitation method***

In a 300 ml glass reactor 20 ml of $TiCl_4$ and x ml of heptane were heated to 90°C. Mixing speed was set to 150 rpm. Then a mixture of 30 ml Mg-alkoxide, prepared according to Example 1, x ml donor and x ml of Viscoplex was slowly added. After 30 minutes mixing was stopped and the catalyst particles were allowed to settle down. After settling, liquid was syphonated away to about 20 ml level.

Then the catalyst particles were washed with 100 ml of toluene at 90°C for 0.5h, followed by two heptane (each: 100 ml, 30 min) washes and finally one pentane wash (100 ml, 30 min). During the second heptane wash temperature

was decreased to room temperature. Details can be seen from Table 1

**Example 3:** ***Preparation of solid catalyst component (Emulsion route):***

19.5 ml of $TiCl_4$ were added in a 300 ml glass reactor. Mixing speed was set to 170 rpm. Then a mixture of 30 ml Mg-alkoxide, prepared as described above, x ml of Donor was slowly added keeping temperature below 25 °C. After five minutes mixing a solution consisting x ml of Viscoplex and 1 ml of toluene solution of Necadd was added. Then x ml of heptane was added and after 5 minutes mixing temperature was rised to 90 °C within 17 min. After 30 minutes mixing was stopped and the catalyst particles were allowed to settle down. After settling, liquid was syphonated away.

Then the catalyst particles were washed with 100 ml of toluene at 90°C for 0.5h, followed by heptane (100 ml, 30 min) and pentane wash (100 ml, 20 min). During the heptane wash temperature was decreased to room temperature.

Details can be seen from Table 1

The following internal donors were used:

2,2-di(2-tetrahydrofuryl)propane (Donor A)
3,3-bis(methoxymethyl)-2,6-dimethylheptane (Donor B)
3,3-bis(ethoxymethyl)-2-methyldodecane (Donor C)
3,3- bis(ethoxymethyl)-2,6-dimethylheptane (Donor D)
4-ethoxy-3-(ethoxymethyl)heptane (Donor E)
2,2-diisobutyl-1,3-dimethoxypropane (Donor F)
9,9-bis(methoxymethyl)fluorene (Donor G)
3,3-bis(butoxymethyl)-2,6-dimethylheptane (Donor H)
4-methoxy-3-(methoxymethylheptane (Donor I)
4-butoxy-3-(butoxymethyl)heptane (Donor J)
3,3-bis(methoxymethyl)heptane (Donor K)
3,3-bis(ethoxymethyl)heptane (Donor L)
1,8-bis(2-ethylhexyloxy)naphthalene (Donor M)

**Comparative Example 1: CE1**

As Comparative Example a catalyst prepared by the emulsion/solidification method according to Example 5 of EP 1403292 using phthaloyl dichloride as internal catalyst precursor (Mg-complex was prepared according to Example 1 of EP 1403292)
(Mg 13.2 wt%, Al 0.4 wt%, Ti 3.5 wt% and 29.9 wt% bis(2-ethylhexyl)phthalate as internal donor; donor amount measured using HPLC)

**Table 1:**

| Donor | [ml] | e/p | heptane [ml] | Viscoplex [ml] | Ti [%] | Mg [%] | Donor [%][1] |
|---|---|---|---|---|---|---|---|
| **A** | 1.0 | p | 10.0 | 2.0 | 5.2 | 12.1 | 8.3 |
| **A** | 1.0 | e | 9.0 | 5.0 | 5.1 | 14.2 | nm |
| **B** | 1.1 | p | 10.0 | 2.0 | 3.0 | 8.6 | 14.0 |
| | 0.6 | p | 10.0 | 2.0 | 3.8 | 7.9 | 6.6 |
| **C** | 1.5 | p | 10.0 | 2.0 | 3.7 | 12.6 | 9.3 |
| | 0.6 | p | 10.0 | 2.0 | 5.1 | 11.5 | 10.9 |
| | 2.0 | e | 15.0 | 5.0 | 3.5 | 11.1 | 25.6 |
| **D** | 0.7 | p | 10.0 | 2.0 | 5.1 | 12.4 | 7.2 |
| | 2.0 | e | 20.0 | 5.0 | 3.3 | 14.7 | 17.6 |
| **E** | 1.0 | e | 7.0 | 2.5 | 3.6 | 16.7 | nm |
| **F** | 1.1 | p | 10.0 | 2.0 | 4.2 | 11.3 | 15.8 |
| **G** | 1.3 g* | p | 10.0 | 2.0 | 2.4 | 6.8 | 18.3 |
| **H** | 0.8 | p | 10.0 | 2.0 | 4.4 | 7.8 | 1.8 |

(continued)

| Donor | [ml] | e/p | heptane [ml] | Viscoplex [ml] | Ti [%] | Mg [%] | Donor [%][1] |
|---|---|---|---|---|---|---|---|
| **I** | 0.9 | p | 10.0 | 2.0 | 6.8 | 13.7 | nm |
| **J** | 0.7 | p | 10.0 | 2.0 | 3.9 | 7.2 | nm |
| **K** | 0.8 | p | 10.0 | 2.0 | 5.1 | 11.7 | 11.6 |
| **L** | 0.9 | p | 10.0 | 2.0 | 3.1 | 7.8 | nm |
| | 2.5 | e | 10.0 | 5.0 | 3.1 | 14.2 | nm |
| **M** | 1.5 | p | 10.0 | 2.0 | 5.0 | 7.4 | nm |

Kind of preparation: e for emulsion according to Example 3 p for precipitation according to Example 2
* Donor G was first dissolved in a small amount of toluene
[1]) donor amount measured using GC
nm.......not measured

**Example 4**

A 5 litre stainless steel reactor was used for propylene polymerisations.

About 0.9 ml triethyl aluminium (TEA) (from Witco, used as received)as a co-catalyst, ca 0.13 ml dicyclopentyl dimethoxy silane (DCDS) (from Wacker, dried with molecular sieves) as an external donor and 30 ml n-pentane were mixed and allowed to react for 5 minutes. Half of the mixture was then added to the polymerisation reactor and the other half was mixed with about 20 mg of a catalyst. After additional 5 minutes the catalyst/TEA/donor/n-pentane mixture was added to the reactor. The Al/Ti ratio was 250 mol/mol and the Al/DCDS ratio was 10 mol/mol. 200 mmol hydrogen and 1400 g propylene were introduced into the reactor and the temperature was raised within ca 15 minutes to the polymerisation temperature (80 °C). The polymerisation time after reaching polymerisation temperature was 60 minutes, after which the polymer formed was taken out from the reactor.

**Table 2: Polymerisation results**

| Catalyst/ Donor | e/p | Activity (kg PP/g cat) | MFR (g/10 min) | XS (wt%) |
|---|---|---|---|---|
| CE1 | | 27.5 | 7.7 | 1.0 |
| A | p | 6.9 | 56 | 5.2 |
| B | p | 6.2 | 44 | 1.2 |
| | p | 11.4 | 38 | 1.9 |
| C | p | 28.1 | 31 | 1.2 |
| | p | 20.2 | 30 | 1.7 |
| | e | 24.5 | 47 | nm |
| D | p | 26.0 | 23.0 | 1.4 |
| | e | 46.2 | 27.0 | nm |
| E | e | 7.5 | 46 | 5.7 |
| F | p | 6.7 | 50 | 2.6 |
| G | p | 8.9 | 28 | 1.0 |
| I | p | 19.7 | 35 | nm |
| K | p | 6.9 | 61 | 2.7 |
| L | p | 18.1 | 42 | 1.3 |
| | e | 21.7 | 52 | 0.8 |

(continued)

| Catalyst/ Donor | e/p | Activity (kg PP/g cat) | MFR (g/10 min) | XS (wt%) |
|---|---|---|---|---|
| M | p | 7.1 | 35 | 4.6 |
| Kind of preparation: e for emulsion according to Example 3 p for precipitation according to Example 2 nm.......not measured | | | | |

As can be seen from Table 2 the catalysts according to the invention yield products with higher MFR which proves the better hydrogen response compared to the comparative catalyst in combination with low XS values.

**EXAMPLE 5: Copolymerisation**

A 5 litre stainless steel reactor was used for propylene polymerisations.

264 μl (triethyl aluminium (TEA) (from Witco, used as received) as a co-catalyst, 45 μl dicyclopentyl dimethoxy silane (DCDS) (from Wacker, dried with molecular sieves) as an external donor and 30 ml n-pentane were mixed and allowed to react for 5 minutes. Half of the mixture was then added to the polymerisation reactor and the other half was mixed with 30 mg of a catalyst. The catalyst in this example was the same catalyst as was used in Example 3 with 3,3 wt% titanium. After additional 10 minutes the catalyst/TEA/donor/n-pentane mixture was added to the reactor. The Al/Ti ratio was 250 mol/mol and the Al/DCDS ratio was 10 mol/mol. 130 mmol hydrogen and 1400 g propylene were introduced into the reactor and the temperature was raised within ca 15 minutes to the polymerisation temperature (70 °C). Ethylene feed was started 5 minutes after starting the temperature increase (at about 40°C) and ethylene was fed continuously throughout the polymerisation, in total 26,6 g. The polymerisation time after polymerisation temperature was 60 minutes, after which the polymer formed was taken out from the reactor. The yield was 509 g.

**Comparative example 2: CE2 Copolymerisation**

This example was done in accordance with example 5, except that the catalyst was the same as the catalyst described in CE1 with 3.1 wt% titanium, catalyst amount 11.1 mg, TEAL amount 300 μl (Al/Ti molar ratio 305) and Al/Do molar ratio 10. The yield was 549 g.

**Comparative example 3: CE3 Copolymerisation**

This example was done in accordance with comparative example CE2, the catalyst was the same as the catalyst described in CE1 with 3.1 wt% titanium, with the exceptions that TEAL amount 300 μl (Al/Ti molar ratio 242), Al/Do molar ratio 10 and fed ethylene amount 26.4 g. The yield was 502 g.

**Comparative example 4: CE4 Copolymerisation**

This example was done in accordance with comparative example CE2, except that the catalyst was the same as the catalyst described in CE1 with 3.7 wt% titanium, TEAL amount 300 μl (Al/Ti 202 mol/mol), Al/Do 10. The yield was 414 g.

The results of the copolymerisation examples can be seen in table 3:

**Table 3: Copolymerisation results**

| **Polymerisation** | **units** | **Ex. 5** | **CE2** | **CE3** | **CE4** |
|---|---|---|---|---|---|
| **Catalyst of** | | * | CE1 | CE1 | CE1 |
| **Ti in catalyst** | [wt%] | 3.3 | 3.1 | 3.1 | 3.7 |
| **Catalyst amount** | [mg] | 11.2 | 11.1 | 14.0 | 14.1 |
| **$C_2$-feed** | [g] | 26.6 | 26.6 | 26.4 | 26.6 |
| **Yield** | [g] | 509 | 549 | 502 | 414 |
| **Activity** | [kgPP/gcath] | 45.4 | 58.5 | 35.9 | 29.4 |
| **$MFR_2$** | [g/10min] | 9.3 | 4.0 | 5.1 | 4.8 |

(continued)

| Polymerisation | units | Ex. 5 | CE2 | CE3 | CE4 |
|---|---|---|---|---|---|
| $C_2$ in polymer | [wt%] | 4.2 | 3.5 | 4.0 | 4.7 |
| Randomness | [%] | 71.3 | 78.5 | 75.1 | 72.2 |
| XS | [wt%] | 9.0 | 4.9 | 7.5 | 11.0 |
| * catalyst using donor D and being prepared according to Example 3 | | | | | |

As can be seen from Table 3 and from Figure 1 the catalysts according to the invention having diether as internal donor gave at least 3% lower randomness at the same $C_2$-content than the catalysts of the comparative examples having a phthalate as internal donor.

## Claims

**1.** Process for preparing an olefin polymerisation catalyst component in the form of solid particles comprising the steps of

a) preparing a solution in an organic liquid reaction medium of at least one alkoxy compound (Ax) being the reaction product of at least one compound of a Group 2 metal with at least a monohydric alcohol (A) wherein the solution comprises in addition to the at least one alkoxy compound (Ax) at least one alkoxy compound (Bx) being the reaction product of at least one compound of Group 2 metal and an alcohol (B) comprising in addition to the hydroxyl moiety at least one further oxygen bearing group being different to a hydroxyl moiety, or wherein the alkoxy compound (Ax) is a reaction product of at least one compound of Group 2 metal and a mixture of monohydric alcohol (A) with a further alcohol (B) comprising in addition to the hydroxyl moiety at least one further oxygen bearing group being different to a hydroxyl moiety, ,
b) adding said solution to at least one compound of a Group 4 metal and
c) preparing the solid catalyst component particles,

wherein a 1,3-diether of formula (I) or (II)

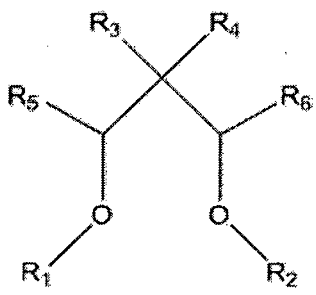 (I) or 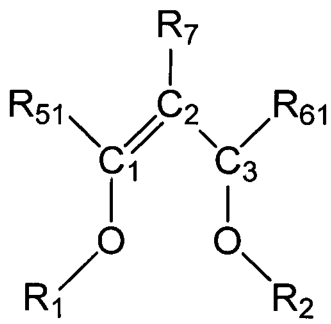 (II)

wherein in formula (I) and (II)

$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,
$R_3$ and $R_4$ of formula (I) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,
$R_5$ and $R_6$ in formula (I) are the same or different and can be H or a linear or branched $C_1$-$C_{12}$-alkyl or can form together an aliphatic ring with 5 to 8 C-atoms, and $R_{51}$, $R_{61}$ and $R_7$ in formula (II) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms,
or mixtures therefrom is added as internal donor at any step prior to step c), wherein no phthalate compound is used in the process.

2. Process according to claim 1, wherein the monohydric alcohols (A) are those of formula ROH in which R is a linear or branched $C_1$-$C_{20}$ alkyl.

3. Process according to claim 1 or, wherein in the alcohol (B) the one further oxygen bearing group is an ether moiety.

4. Process according to claim 1-3, wherein the alcohol (B) is a $C_2$ to $C_4$ glycol monoether, wherein the ether moiety comprises from 2 to 18 carbon atoms.

5. Process according to any preceding claim wherein said Group 2 metal is magnesium.

6. A process according to any preceding claim wherein said transition metal is Ti.

7. Process according to any preceding claim wherein the preparation of the olefin polymerisation catalyst component in form of solid particles comprises the steps of

(a1) preparing a solution (S1) of at least one alkoxy compound (Ax), being a reaction product of at least one compound of a Group 2 metal with at least a monohydric alcohol (A) and an electron donor of formula (I) or (II) in an organic liquid reaction medium (OM1),
(b1) combining said solution (S1) with at least one transition metal compound (CT), and
(c1) precipitating said catalyst component in the form of a solid particle, and
(d1) recovering the solidified particles of the olefin polymerisation catalyst component.

8. Process according to claim 7 wherein the addition of solution (S1) to the at least one transition metal compound (CT) in step (b1) is done at a temperature range of 50 to 110 °C, at which temperature the at least one transition metal compound (CT) is in a liquid form, resulting in the precipitation of said solid catalyst components, whereby a surfactant can be added in step (a1) or step (b1).

9. Process according to claim 7 wherein the solution (S1) is mixed with at least one transition metal compound (CT) in liquid form at a temperature of about -20°C to about 30°C and precipitating the solid catalyst components by subsequently slowly raising the temperature to a temperature range of 50 to 110 °C, whereby the rate of temperature increase is in the range from 0.1 °C to 30°C per minute, preferably 0.5 to 10°C per minute and whereby a surfactant is added to the solution (S1) before step (b1).

10. Process according to any of preceding claims 1 to 6 wherein the preparation of the catalyst component in form of solid particles comprises the steps of

(a2) preparing a solution of at least one alkoxy compound (Ax), being a reaction product of at least one compound of a Group 2 metal with at least a monohydric alcohol (A) and an electron donor of formula (I) or (II) in an organic liquid reaction medium,
(b2) adding said solution of said alkoxy compound (Ax) to at least one compound of a transition metal to produce an emulsion, wherein the dispersed phase of which is in the form of droplets and contains more than 50 mol% of the Group 2 metal in said alkoxy compound (Ax),
(c2) agitating the emulsion in order to maintain the droplets of said dispersed phase within said predetermined average size range of 2 to 500 $\mu$m,
(d2) solidifying said droplets of the dispersed phase,
(e2) recovering the solidified particles of the olefin polymerisation catalyst component.

11. Process according to claim 10 **characterized in that** it is carried out continuously.

12. Particles of the catalyst component obtainable according to any of claims 1 to 11.

13. Particles according to claim 12, wherein the solid catalyst component comprises

a) a Group 4 metal, preferably Ti content (determined by ICP Analysis) in the range of 1.0 to 10.0 wt%, preferably 1.5 to 8.5 wt%, more preferably 2.0 to 7.0 wt%
b) a Group 2 metal, preferably Mg content (determined by ICP Analysis) in the range of 5.0 to 22.0 wt%, preferably 6.0 to 20.0 wt%, more preferably 6.5 to 18.0 wt%
c) an Al content (determined by ICP Analysis) in the range of 0.0 to 0.8 wt%, preferably 0.0 to 0.5 wt%, more

preferably 0.0 to 0.4 wt%

d) an mean particle size (determined by using a Coulter Counter LS200 at 25°C in n-heptane) in the range of 2 to 500 $\mu$m, preferably 5 to 200 $\mu$m, more preferably 10 to 100 $\mu$m

e) and an internal donor selected from a 1,3-diether of formula (I) or (II)

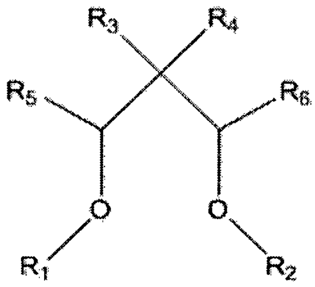 (I) or 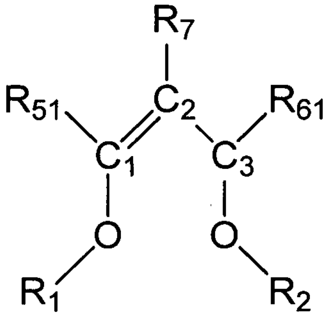 (II)

wherein in formula (I) and (II)

$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,

$R_3$ and $R_4$ of formula (I) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,

$R_5$ and $R_6$ in formula (I) are the same or different and can be H or a linear or branched $C_1$-$C_{12}$-alkyl or can form together an aliphatic ring with 5 to 8 C-atoms,

and $R_{51}$, $R_{61}$ and $R_7$ in formula (II) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms,

or mixtures therefrom.

**14.** An olefin polymerisation catalyst comprising particles of the catalyst component according to claim 12 or 13 and a co-catalyst, preferably an alkyl aluminium co-catalyst and optionally an external electron donor.

**15.** Use of the catalyst as defined in claim 14 for polymerising olefins, in particular $C_2$ to $C_{10}$ $\alpha$-olefins, preferably ethylene or propylene, optionally with co-monomers, selected from $C_2$ to $C_{12}$ monomers.

## Patentansprüche

**1.** Verfahren zur Herstellung einer Olefin-Polymerisations-Katalysator-Komponente in Form von festen Teilchen, umfassend die Schritte von

a) Herstellen einer Lösung in einem organischen flüssigen Reaktions-Medium von mindestens einer Alkoxy-Verbindung (Ax), die das Reaktions-Produkt von mindestens einer Verbindung von einem Metall der Gruppe 2 mit mindestens einem einwertigen Alkohol (A) ist, wobei die Lösung zusätzlich zu der mindestens einen Alkoxy-Verbindung (Ax) mindestens eine Alkoxy-Verbindung (Bx) umfasst, die das Reaktions-Produkt von mindestens einer Verbindung von Metall der Gruppe 2 und einem Alkohol (B) ist, umfassend zusätzlich zu der Hydroxyl-Einheit mindestens eine weitere Sauerstoff tragende Gruppe, die von einer Hydroxyl-Einheit verschieden ist, oder wobei die Alkoxy-Verbindung (Ax) ein Reaktions-Produkt von mindestens einer Verbindung von Metall der Gruppe 2 und einem Gemisch von einwertigem Alkohol (A) mit einem weiteren Alkohol (B) ist, umfassend zusätzlich zu der Hydroxyl-Einheit mindestens eine weitere Sauerstoff tragende Gruppe, die von einer Hydroxyl-Einheit verschieden ist,

b) Zugeben der Lösung zu mindestens einer Verbindung von einem Metall der Gruppe 4 und

c) Herstellen der festen Katalysator-Komponenten-Teilchen,

wobei ein 1,3-Diether der Formel (I) oder (II)

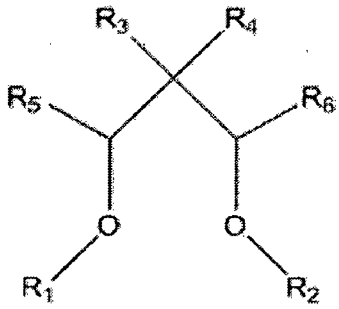 (I) oder 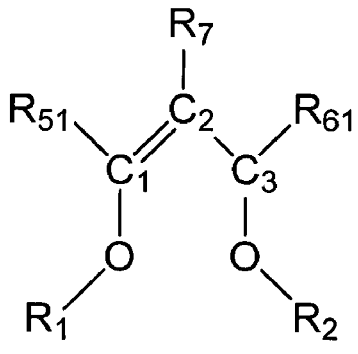 (II)

worin in Formel (I) und (II)
$R_1$ und $R_2$ gleich oder verschieden sind und ein lineares oder verzweigtes $C_1$-$C_{12}$-Alkyl sein können, oder $R_1$ mit $R_5$ und/oder $R_2$ mit $R_6$ einen Ring mit 4 bis 6 C-Atomen bilden können,
$R_3$ und $R_4$ der Formel (I) gleich oder verschieden sind und H oder ein lineares oder verzweigtes $C_1$-$C_{12}$-Alkyl sein können oder $R_3$ und $R_4$ zusammen einen Ring mit 5 bis 10 C-Atomen bilden können, der Teil von einem aliphatischen oder aromatischen polycyclischen Ringsystem mit 9 bis 20 C-Atomen sein kann, $R_5$ und $R_6$ in Formel (I) gleich oder verschieden sind und H oder ein lineares oder verzweigtes $C_1$-$C_{12}$-Alkyl sein können oder zusammen einen aliphatischen Ring mit 5 bis 8 C-Atomen bilden können, und $R_{51}$, $R_{61}$ und $R_7$ in Formel (II) gleich oder verschieden sind und H oder ein lineares oder verzweigtes $C_1$-$C_{12}$-Alkyl sein können oder zwei oder drei von $R_{51}$, $R_{61}$ und $R_7$ zusammen mit $C_1$ bis $C_3$ einen aromatischen Ring oder Ringsystem mit 6 bis 14 C-Atomen, vorzugsweise 10 bis 14 C-Atomen, bilden können,
oder Gemische davon als innerer Donor bei einem beliebigen Schritt vor Schritt c) zugegeben wird, wobei keine Phthalat-Verbindung in dem Verfahren verwendet wird.

**2.** Verfahren nach Anspruch 1, wobei die einwertigen Alkohole (A) jene der Formel ROH sind, in denen R ein lineares oder verzweigtes $C_1$-$C_{20}$-Alkyl ist.

**3.** Verfahren nach Anspruch 1, wobei in dem Alkohol (B) die eine weitere Sauerstoff tragende Gruppe eine Ether-Einheit ist.

**4.** Verfahren nach Anspruch 1-3, wobei der Alkohol (B) ein $C_2$ bis $C_4$ Glycol-monoether ist, wobei die Ether-Einheit von 2 bis 18 Kohlenstoff-Atome umfasst.

**5.** Verfahren nach einem vorangehenden Anspruch, wobei das Metall der Gruppe 2 Magnesium ist.

**6.** Verfahren nach einem vorangehenden Anspruch, wobei das Übergangs-Metall Ti ist.

**7.** Verfahren nach einem vorangehenden Anspruch, wobei die Herstellung der Olefin-Polymerisations-Katalysator-Komponente in Form von festen Teilchen die Schritte umfasst von

(a1) Herstellen einer Lösung (S1) von mindestens einer Alkoxy-Verbindung (Ax), die ein Reaktions-Produkt von mindestens einer Verbindung von einem Metall der Gruppe 2 mit mindestens einem einwertigen Alkohol (A) ist und einem Elektronen-Donor der Formel (I) oder (II) in einem organischen flüssigen Reaktions-Medium (OM1),
(b1) Vereinigen der Lösung (S1) mit mindestens einer Übergangs-Metall-Verbindung (CT), und
(c1) Ausfällen der Katalysator-Komponente in Form von einem festen Teilchen, und
(d1) Gewinnen der verfestigten Teilchen der Olefin-Polymerisations-Katalysator-Komponente.

**8.** Verfahren nach Anspruch 7, wobei die Zugabe von Lösung (S1) zu der mindestens einen Übergangs-Metall-Verbindung (CT) in Schritt (b1) bei einem Temperatur-Bereich von 50 bis 110°C ausgeführt wird, wobei bei der Temperatur die mindestens eine Übergangs-Metall-Verbindung (CT) in einer flüssigen Form vorliegt, was zur Ausfällung der festen Katalysator-Komponenten führt, wobei ein Tensid in Schritt (a1) oder Schritt (b1) zugegeben werden kann.

**9.** Verfahren nach Anspruch 7, wobei die Lösung (S1) mit mindestens einer Übergangs-Metall-Verbindung (CT) in flüssiger Form bei einer Temperatur von etwa -20°C bis etwa 30°C gemischt wird und Ausfällen der festen Katalysator-Komponenten durch anschließendes langsames Erhöhen der Temperatur auf einen Temperatur-Bereich von 50 bis 110°C, wobei die Rate der Temperatur-Erhöhung im Bereich von 0,1°C bis 30°C pro Minute, vorzugsweise 0,5 bis 10°C pro Minute, ist und wobei ein Tensid zu der Lösung (S1) vor Schritt (b1) gegeben wird.

**10.** Verfahren nach einem der vorangehenden Ansprüche 1 bis 6, wobei die Herstellung der Katalysator-Komponente in Form von festen Teilchen die Schritte umfasst von

(a2) Herstellen einer Lösung von mindestens einer Alkoxy-Verbindung (Ax), die ein Reaktions-Produkt von mindestens einer Verbindung von einem Metall der Gruppe 2 mit mindestens einem einwertigen Alkohol (A) ist und einem Elektronen-Donor der Formel (I) oder (II) in einem organischen flüssigen Reaktions-Medium,
(b2) Zugeben der Lösung der Alkoxy-Verbindung (Ax) zu mindestens einer Verbindung von einem Übergangs-Metall zum Herstellen einer Emulsion, wobei die dispergierte Phase davon in Form von Tröpfchen vorliegt und mehr als 50 Mol-% von dem Metall der Gruppe 2 in der Alkoxy-Verbindung (Ax) enthält,
(c2) Bewegen der Emulsion, um die Tröpfchen der dispergierten Phase in dem vorbestimmten mittleren Größen-Bereich von 2 bis 500 μm zu halten,
(d2) Verfestigen der Tröpfchen der dispergierten Phase,
(e2) Gewinnen der verfestigten Teilchen der Olefin-Polymerisations-Katalysator-Komponente.

**11.** Verfahren nach Anspruch 10, **dadurch gekennzeichnet, dass** es kontinuierlich ausgeführt wird.

**12.** Teilchen der Katalysator-Komponente, erhältlich nach einem der Ansprüche 1 bis 11.

**13.** Teilchen nach Anspruch 12, wobei die feste Katalysator-Komponente umfasst

a) ein Metall der Gruppe 4, vorzugsweise Ti-Gehalt (bestimmt durch ICP-Analyse) im Bereich von 1,0 bis 10,0 Gew.-%, vorzugsweise 1,5 bis 8,5 Gew.-%, bevorzugter 2,0 bis 7,0 Gew.-%
b) ein Metall der Gruppe 2, vorzugsweise Mg-Gehalt (bestimmt durch ICP-Analyse) im Bereich von 5,0 bis 22,0 Gew.-%, vorzugsweise 6,0 bis 20,0 Gew.-%, bevorzugter 6,5 bis 18,0 Gew.-%
c) einen Al-Gehalt (bestimmt durch ICP-Analyse) im Bereich von 0,0 bis 0,8 Gew.-%, vorzugsweise 0,0 bis 0,5 Gew.-%, bevorzugter 0,0 bis 0,4 Gew.-%
d) eine mittlere Teilchen-Größe (bestimmt unter Verwendung eines Coulter-Counters LS200 bei 25°C in n-Heptan) im Bereich von 2 bis 500 μm, vorzugsweise 5 bis 200 μm, bevorzugter 10 bis 100 μm
e) und einen inneren Donor, ausgewählt aus einem 1,3-Diether der Formel (I) oder (II)

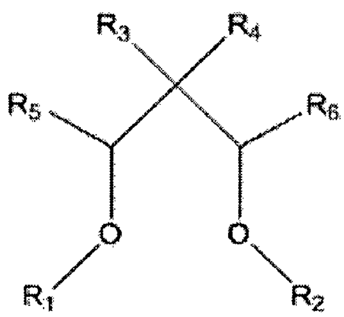 (I) oder 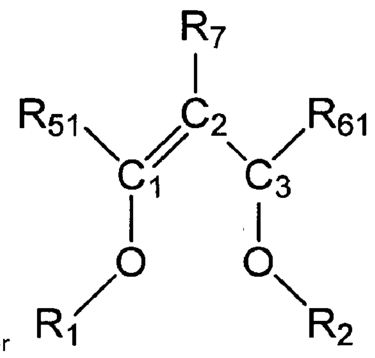 (II)

worin in Formel (I) und (II)
$R_1$ und $R_2$ gleich oder verschieden sind und ein lineares oder verzweigtes $C_1$-$C_{12}$-Alkyl sein können, oder $R_1$ mit $R_5$ und/oder $R_2$ mit $R_6$ einen Ring mit 4 bis 6 C-Atomen bilden können,
$R_3$ und $R_4$ der Formel (I) gleich oder verschieden sind und H oder ein lineares oder verzweigtes $C_1$-$C_{12}$-Alkyl sein können oder $R_3$ und $R_4$ zusammen einen Ring mit 5 bis 10 C-Atomen bilden können, der Teil von einem aliphatischen oder aromatischen polycyclischen Ringsystem mit 9 bis 20 C-Atomen sein kann, $R_5$ und $R_6$ in Formel (I) gleich oder verschieden sind und H oder ein lineares oder verzweigtes $C_1$-$C_{12}$-Alkyl sein können oder zusammen einen aliphatischen Ring mit 5 bis 8 C-Atomen bilden können,
und $R_{51}$, $R_{61}$ und $R_7$ in Formel (II) gleich oder verschieden sind und H oder ein lineares oder verzweigtes $C_1$-$C_{12}$-Alkyl sein können oder zwei oder drei von $R_{51}$, $R_{61}$ und $R_7$ zusammen mit $C_1$ bis $C_3$ einen aromatischen Ring oder Ringsystem mit 6 bis 14 C-Atomen, vorzugsweise 10 bis 14 C-Atomen, bilden können,

oder Gemischen davon.

**14.** Olefin-Polymerisations-Katalysator, umfassend Teilchen von der Katalysator-Komponente nach Anspruch 12 oder 13 und einen Co-Katalysator, vorzugsweise einen Alkyl-Aluminium-Co-Katalysator und gegebenenfalls einen äußeren Elektronen-Donor.

**15.** Verwendung des Katalysators, wie in Anspruch 14 definiert, zum Polymerisieren von Olefinen, insbesondere $C_2$ bis $C_{10}$ $\alpha$-Olefinen, vorzugsweise Ethylen oder Propylen, gegebenenfalls mit Co-monomeren, ausgewählt aus $C_2$ bis $C_{12}$ Monomeren.

**Revendications**

**1.** Procédé pour préparer un composant de catalyseur de polymérisation d'oléfines sous la forme de particules solides, comprenant les étapes suivantes :

a) préparation d'une solution, dans un milieu réactionnel liquide organique, d'au moins un composé alcoxy (Ax) qui est le produit de la réaction d'au moins un composé d'un métal du Groupe 2 et d'au moins un alcool monovalent (A), la solution comprenant, en plus de l'au moins un composé alcoxy (Ax), au moins un composé alcoxy (Bx) qui est le produit de la réaction d'au moins un composé d'un métal du Groupe 2 et d'un alcool (B) et comprenant, en plus du fragment hydroxyle, au moins un autre groupe portant de l'oxygène qui est différent d'un fragment hydroxyle, ou bien le composé alcoxy (Ax) étant le produit de la réaction d'au moins un composé d'un métal du Groupe 2 et d'un mélange d'alcool monovalent (A) avec un autre alcool (B) comprenant, en plus du fragment hydroxyle, au moins un autre groupe portant de l'oxygène qui est différent d'un fragment hydroxyle,
b) addition de ladite solution à au moins un composé d'un métal du Groupe 4, et
c) préparation des particules de composant de catalyseur solide,

dans lequel un 1,3-diéther de formule (I) ou (II)

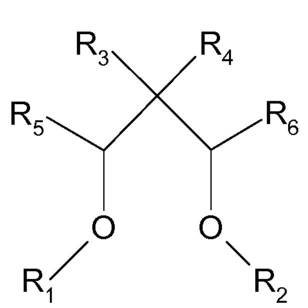
ou
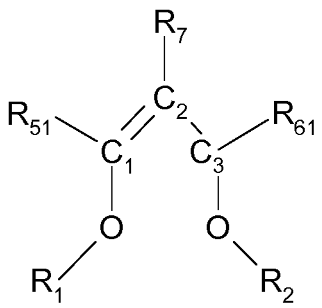

(I) (II)

où, dans les formules (I) et (II)
$R_1$ et $R_2$ sont identiques ou différents et peuvent être un alkyle en $C_1$ à $C_{12}$ linéaire ou ramifié, ou bien $R_1$ avec $R_5$ et/ou $R_2$ avec $R_6$ peuvent former un cycle comportant 4 à 6 atomes C,
$R_3$ et $R_4$ dans la formule (I) sont identiques ou différents et peuvent être H ou un alkyle en $C_1$ à $C_{12}$ linéaire ou ramifié, ou bien $R_3$ et $R_4$ peuvent former ensemble un cycle comportant 5 à 10 atomes C, qui peut faire partie d'un système cyclique polycyclique aliphatique ou aromatique comportant 9 à 20 atomes C,
$R_5$ et $R_6$ dans la formule (I) sont identiques ou différents et peuvent être H ou un alkyle en $C_1$ à $C_{12}$ linéaire ou ramifié ou bien peuvent former ensemble un cycle aliphatique comportant 5 à 8 atomes C, et
$R_{51}$, $R_{61}$ et $R_7$ dans la formule (II) sont identiques ou différents et peuvent être H ou un alkyle en $C_1$ à $C_{12}$ linéaire ou ramifié, ou bien deux ou trois parmi $R_{51}$, $R_{61}$ et $R_7$ peuvent former, conjointement avec $C_1$ à $C_3$, un cycle aromatique ou un système cyclique comportant 6 à 14 atomes C, de préférence 10 à 14 atomes C,
ou un mélange de tels composés, est ajouté en tant que donneur interne à n'importe quelle étape avant l'étape c), dans lequel aucun composé phtalate n'est utilisé dans le procédé.

**2.** Composé selon la revendication 1, dans lequel les alcools monovalents (A) sont ceux de formule ROH dans laquelle R est un alkyle en $C_1$ à $C_{20}$ linéaire ou ramifié.

**3.** Procédé selon la revendication 1, dans lequel, dans l'alcool (B), l'autre groupe portant de l'oxygène est un fragment éther.

**4.** Procédé selon les revendications 1 à 3, dans lequel l'alcool (B) est un monoéther de glycol en $C_2$ à $C_4$, et dans lequel le fragment éther comprend de 2 à 18 atomes de carbone.

**5.** Procédé selon l'une quelconque des revendications précédentes, dans lequel ledit métal du Groupe 2 est le magnésium.

**6.** Procédé selon l'une quelconque des revendications précédentes, dans lequel ledit métal de transition est Ti.

**7.** Procédé selon l'une quelconque des revendications précédentes, dans lequel la préparation du composant de catalyseur de polymérisation d'oléfines sous la forme de particules solides comprend les étapes suivantes :

(a1) préparation d'une solution (S1) d'au moins un composé alcoxy (Ax) qui est le produit de la réaction d'au moins un composé d'un métal du Groupe 2 et d'au moins un alcool monovalent (A), et d'un donneur d'électron de formule (I) ou (II) dans un milieu réactionnel liquide organique (OM1),
(b1) combinaison de ladite solution (S1) avec au moins un composé de métal de transition (CT), et
(c1) précipitation dudit composant de catalyseur sous la forme d'une particule solide, et
(d1) récupération des particules solidifiées du composant de catalyseur de polymérisation d'oléfines.

**8.** Procédé selon la revendication 7, dans lequel l'addition de la solution (S1) à l'au moins un composé de métal de transition (CT) dans l'étape (b1) est effectuée à une température située dans la plage allant de 50 à 110°C, température à laquelle l'au moins un composé de métal de transition (CT) est sous une forme liquide, ce qui a pour résultat la précipitation desdits composants de catalyseur solides, et un tensioactif pouvant être ajouté dans l'étape (a1) ou l'étape (b1).

**9.** Procédé selon la revendication 7, dans lequel la solution (S1) est mélangée avec au moins un composé de métal de transition (CT) sous forme liquide à une température d'environ -20°C à environ 30°C, après quoi les composants de catalyseur solides sont précipités par élévation lente subséquente de la température à une température située dans la plage allant de 50 à 110°C, la vitesse de montée en température étant située dans la plage allant de 0,1°C à 30°C par minute, de préférence de 0,5 à 10°C par minute, et un tensioactif étant ajouté à la solution (S1) avant l'étape (b1).

**10.** Procédé selon l'une quelconque des revendications 1 à 6, dans lequel la préparation du composant de catalyseur sous la forme de particules solides comprend les étapes suivantes :

(a2) préparation d'une solution d'au moins un composé alcoxy (Ax) qui est le produit de la réaction d'au moins un composé d'un métal du Groupe 2 et d'au moins un alcool monovalent (A), et d'un donneur d'électron de formule (I) ou (II) dans un milieu réactionnel liquide organique,
(b2) addition de ladite solution dudit composé alcoxy (Ax) à au moins un composé d'un métal de transition pour produire une émulsion, dont la phase dispersée est sous la forme de gouttelettes et contient plus de 50 % en moles du métal du Groupe 2 dans ledit composé alcoxy (Ax),
(c2) agitation de l'émulsion afin que les gouttelettes de ladite phase dispersée soient maintenues dans l'intervalle de granulométrie prédéterminé allant de 2 à 500 $\mu$m,
(d2) solidification desdites gouttelettes de la phase dispersée,
(e2) récupération des particules solidifiées du composant de catalyseur de polymérisation d'oléfines.

**11.** Procédé selon la revendication 10, **caractérisé en ce qu'**il est effectué en continu.

**12.** Particules du composant de catalyseur pouvant être obtenu conformément à l'une quelconque des revendications 1 à 11.

**13.** Particules selon la revendication 12, dans lesquelles le composant de catalyseur solide comprend

a) une teneur en un métal du Groupe 4, de préférence en Ti (déterminée par analyse ICP), située dans la plage allant de 1,0 à 10,0 % en poids, de préférence de 1,5 à 8,5 % en poids, plus préférablement de 2,0 à 7,0 % en poids,
b) une teneur en un métal du Groupe 2, de préférence en Mg (déterminée par analyse ICP), située dans la

plage allant de 5,0 à 22,0 % en poids, de préférence de 6,0 à 20,0 % en poids, plus préférablement de 6,5 à 18,0 % en poids,

c) une teneur en Al (déterminée par analyse ICP) située dans la plage allant de 0,0 à 0,8 % en poids, de préférence de 0,0 à 0,5 % en poids, plus préférablement de 0,0 à 0,4 % en poids,

d) une granulométrie moyenne (déterminée par utilisation d'un compteur Coulter LS200 à 25°C dans le n-heptane) située dans la plage allant de 2 à 500 μm, de préférence de 5 à 200 μm, plus préférablement de 10 à 100 μm,

e) et un donneur d'électron interne choisi parmi un 1,3-diéther de formule (I) ou (II)

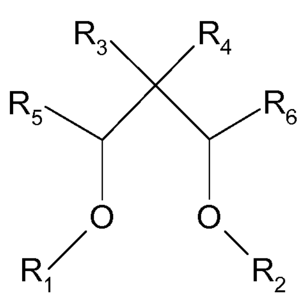

ou

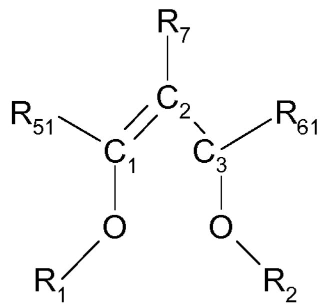

(I) (II)

où, dans les formules (I) et (II)

$R_1$ et $R_2$ sont identiques ou différents et peuvent être un alkyle en $C_1$ à $C_{12}$ linéaire ou ramifié, ou bien $R_1$ avec $R_5$ et/ou $R_2$ avec $R_6$ peuvent former un cycle comportant 4 à 6 atomes C,

$R_3$ et $R_4$ dans la formule (I) sont identiques ou différents et peuvent être H ou un alkyle en $C_1$ à $C_{12}$ linéaire ou ramifié, ou bien $R_3$ et $R_4$ peuvent former ensemble un cycle comportant 5 à 10 atomes C, qui peut faire partie d'un système cyclique polycyclique aliphatique ou aromatique comportant 9 à 20 atomes C,

$R_5$ et $R_6$ dans la formule (I) sont identiques ou différents et peuvent être H ou un alkyle en $C_1$ à $C_{12}$ linéaire ou ramifié ou bien peuvent former ensemble un cycle aliphatique comportant 5 à 8 atomes C, et

$R_{51}$, $R_{61}$ et $R_7$ dans la formule (II) sont identiques ou différents et peuvent être H ou un alkyle en $C_1$ à $C_{12}$ linéaire ou ramifié, ou bien deux ou trois parmi $R_{51}$, $R_{61}$ et $R_7$ peuvent former, conjointement avec $C_1$ à $C_3$, un cycle aromatique ou un système cyclique comportant 6 à 14 atomes C, de préférence 10 à 14 atomes C, ou des mélanges de tels composés.

**14.** Catalyseur de polymérisation d'oléfines comprenant des particules du composant de catalyseur selon la revendication 12 ou 13 et un cocatalyseur, de préférence un cocatalyseur alkyl-aluminium, et éventuellement un donneur d'électron externe.

**15.** Utilisation du catalyseur tel que défini dans la revendication 14 pour la polymérisation d'oléfines, en particulier d'α-oléfines en $C_2$ à $C_{10}$, de préférence de l'éthylène ou du propylène, éventuellement avec des comonomères choisis parmi les monomères en $C_2$ à $C_{12}$.

Figure 1:

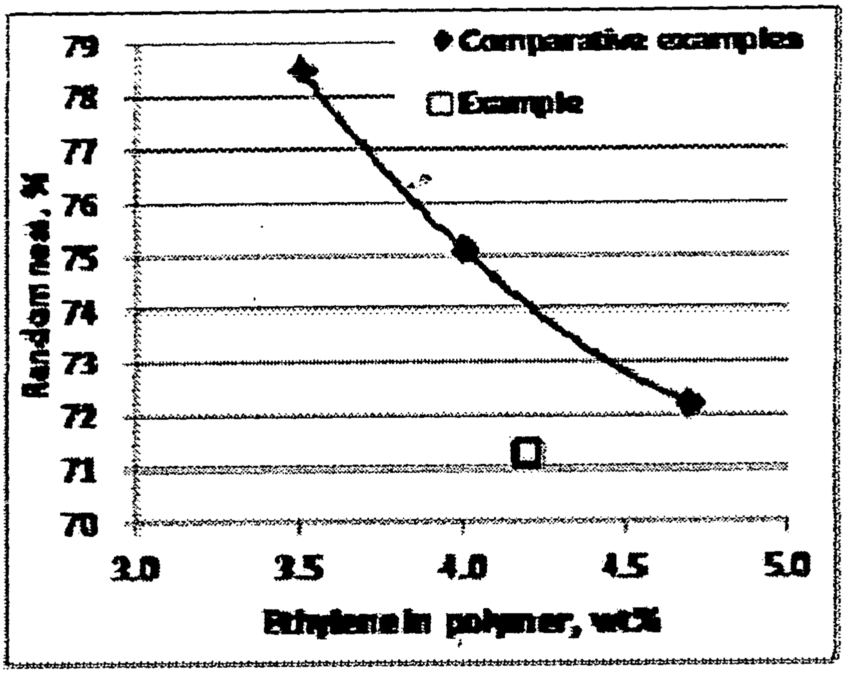
Comparative examples
Example
79
78
77
76
75
74
73
72
71
70
Random neat, %
3.0
3.5
4.0
4.5
5.0
Ethylene in polymer, wt%

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0155230 A
- EP 713886 A
- EP 856013 A
- WO 0008073 A
- WO 0008074 A
- EP 926165 A
- US 20050176900 A
- WO 03000757 A
- WO 03000754 A
- WO 2004029112 A
- WO 2004054711 A
- US 20080161513 A
- JP 10060041 A
- EP 1862480 A
- EP 1862481 A
- EP 1489110 A
- EP 1403292 A


### Non-patent literature cited in the description


- *IUPAC, Nomenclature of Inorganic Chemistry,* 1989